(19)

Europäisches
Patentamt

European
Patent Office

Office européen
des brevets

(11)  **EP 1 855 390 B1**

(12)  **EUROPEAN PATENT SPECIFICATION**

(45) Date of publication and mention
of the grant of the patent:
**07.05.2008  Bulletin 2008/19**

(51) Int Cl.:
*H04B 7/005* [(2006.01)]     *H04L 12/56* [(2006.01)]

(21) Application number: **06009845.6**

(22) Date of filing: **12.05.2006**

(54) **Methods and devices for interference tolerance signalling and power control using busy-signal concept**

Verfahren und Vorrichtungen zur Interferenztoleranzsignalisierung und Leistungsregelung mittels Belegsignalkonzept

Procédés et appareils pour la signalisation de la tolérance aux interférences et pour la commande de la puissance en utilisant un concept de signal d'occupation

(84) Designated Contracting States:
**DE GB**

(43) Date of publication of application:
**14.11.2007  Bulletin 2007/46**

(73) Proprietor: **NTT DoCoMo, Inc.**
**Tokyo 100-6150 (JP)**

(72) Inventors:
• **Auer, Gunther, Dr.**
**80339 München (DE)**
• **Haas, Harald**
**28755 Bremen (DE)**
• **Omiyi, Peter**
**28759 Bremen (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**EP-A- 1 463 225          WO-A-01/03357**
**WO-A-20/04100461**

EP 1 855 390 B1

**Description**

The present invention is in the field of cellular, ad hoc, and multi-hop multi-carrier and single-carrier TDD based networks, and it addresses link adaptation, interference avoidance, interference mitigation and interference management, as well as medium access control and quality of service support for multi-user access.

Unlike spread spectrum techniques, multi carrier and single carrier transmission systems do not have an in-build interference resistance mechanism, which would enable them to be used in multiple cell environments such that universal frequency reuse would be possible. The issue of an intelligent frequency reuse in order to effectively combat co-channel interference (CCI) is an open problem. Furthermore, the lack of a centralized node in ad hoc or multi-hop networks raises the problem that radio resource management (e.g. time and frequency management) cannot be done in a centralized manner. Therefore, the radio resource management in ad hoc or multi-hop networks is another open problem.

A known protocol that is used in multi-hop and ad hoc networks for efficient radio resource management is the so-called busy burst time division multiple access protocol (BB-TDMA). BB-TDMA is a busy burst broadcast protocol utilizing the properties of time division duplex (TDD) to support efficient interference management. A network node, which is currently receiving data, broadcasts a busy burst to prevent potential interferers from transmitting concurrently. A potential transmitter, would only start a transmission if the busy burst is received below a certain threshold. The busy burst is broadcast in mini slots or busy signal time slots, which occupy a portion of the time frame structure, with one busy signal time slot being associated with each payload signal time slot. Every transmitter must listen to the busy signal to determine, if it can transmit as scheduled or not without causing significant interference to other users.

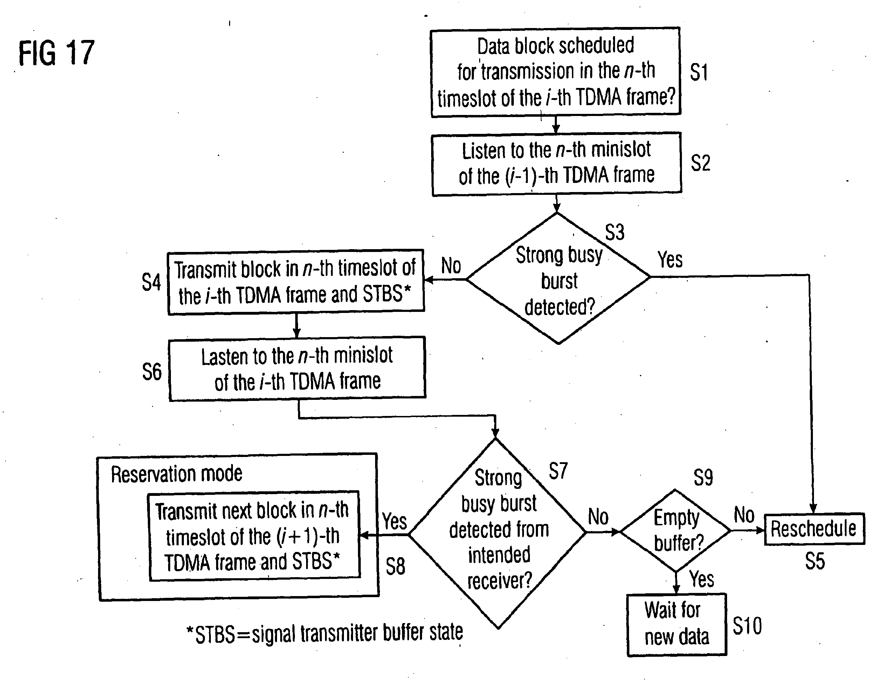

A conventional BB-TDMA transmitter can be in two different modes, the so-called contention mode and the reservation mode. A conventional transmitter following the BB-TDMA protocol, is in a contention mode if there is payload data available for transmission during a radio frame, but the transmitter has not accessed the system yet. Therefore, the transmitter attempts to allocate resources, i.e. a payload signal time slot, in order to start transmission. In Fig. 17 a flowchart of a BB-TDMA transmitter in contention mode is depicted.

In a first step S1 a data block is scheduled for transmission in the n-th time slot of the i-th TDMA frame. Once a data block has been scheduled the transceiver will start to listen to the n-th mini slot, i.e. the busy signal time slot, of the (i-1)-th TDMA frame in a second step S2. In a third step S3, there are two possibilities, either the transmitter has received a strong busy burst, then the desired n-th time slot is already occupied and the data block has to be rescheduled, indicated by step S5 in the flowchart in Fig. 17. If the transmitter does not detect a strong busy burst in step S3, then this indicates that the desired n-th time slot is not occupied and the transmitter can start a transmission in step S4 and transmit the data block in the n-th time slot of the i-th TDMA frame. It would also signal the transmitter buffer state to let the receiver know, how many data the transmitter is planning to transmit. After the transmitter has transmitted its first data block it will listen in a step S6 to the n-th busy signal time slot of the i-th TDMA frame. Again, there are two possibilities for the n-th busy signal time slot, if the transmitter detects a strong busy burst from the intended receiver the transmitter follows on in step S8 and transmits the next block in the n-th time slot of the i+1 TDMA frame, and signals again its transmitter buffer state. If the transmitter was not able to detect a strong busy burst from the intended receiver in step S7, but it has still data in its buffer, then the transmission has to be rescheduled corresponding to step S5, which is similar to the situation when a strong busy burst was detected in step S3, where the transmitter was trying to find an available payload time slot. However, if the transmitter buffer is empty, i.e. there is no more data to transmit, then the transmission is completed and the transmitter can wait for new data as indicated in the step S10 in Fig. 17. Clearly, the reception of a busy burst after a first data block has been transmitted serves as an acknowledgement for the transmitter and also for a protection of transmissions from other transmitters, which receive the busy burst in the busy signal time slot associated with that particular payload time slot, and once they detect a busy burst they would reschedule their transmissions and neither access nor interfere the transmission of the desired transmitter. Looking at the transmitter, the busy burst serves as an acknowledgement for the transmission of the first data block and brings the transmitter in a second state, the so-called reservation mode. The reservation mode corresponds to step S8 in Fig. 17, where the transmission of the first data block was successfully acknowledged and the transmitter carries on with the transmission.

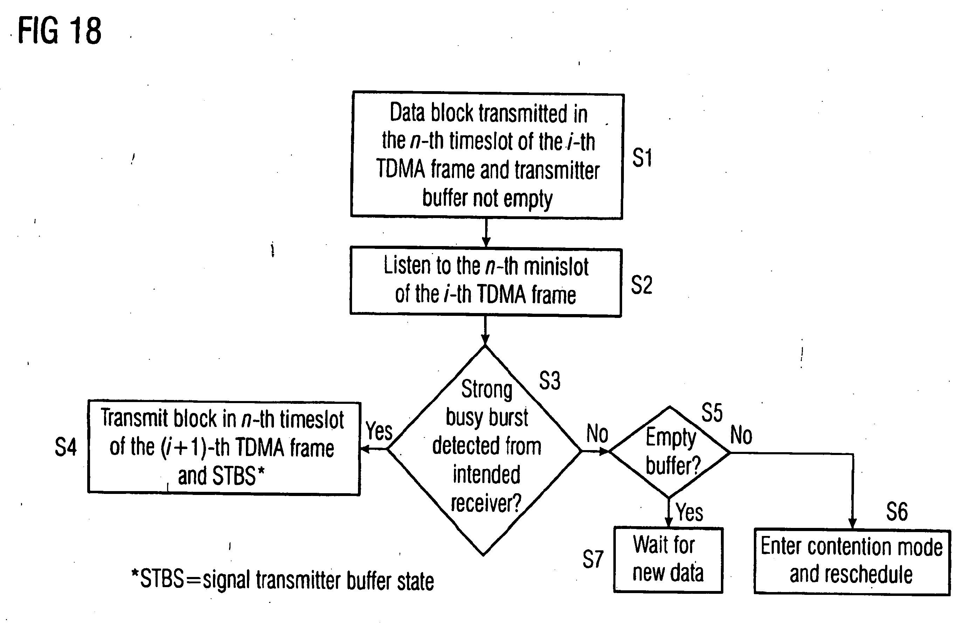

A flowchart of the behavior of a transmitter in reservation mode according to step S8 of Fig. 17 is displayed in Fig. 18. The first step S1 of the flowchart corresponds to the situation where a data block has been transmitted and acknowledged in the n-th time slot of the i-th TDMA frame and the transmitter buffer is not empty yet. The transmitter would then transmit the next data block and listen to the n-th minislot of the i-th TDMA-frame in a step S2, upon which it can either detect a strong busy burst in the n-th mini slot or busy signal time slot or not, according to step S3 in Fig. 18. If it detects a strong busy burst from the intended receiver in step S3 it would carry on transmitting and transmit another data block in the n-th time slot of the i+1 TDMA frame, also signaling its transmitter buffer state. The transmitter then stays in reservation mode and carries on transmitting data for as long as it detects strong busy bursts in the associated busy signal time slot from the intended receiver. If at some point it does not detect a strong busy burst from the intended receiver in step S3, then there are two possibilities. If its transmitter buffers are empty then the transmission is completed and the transmitter can go back into contention mode and wait for new data. If the buffers are not empty, then not detecting a strong busy burst from the intended receiver serves as a negative acknowledgement of the last transmission and the transmitter reverts back into contention mode, which is indicated in step S6 in Fig. 18 and reschedules the last transmission. From the Figs. 17 and 18 it can be seen that a transmitter is only in contention mode for initial transmissions or retransmissions, if it succeeds in transmitting a data block in contention mode, it immediately changes to reservation mode, staying for as long as it continuously transmits data blocks successfully. If either its buffers are empty or a successful reception of the data block is not acknowledged by the receiver transmitting a busy burst, it reverts into contention mode.

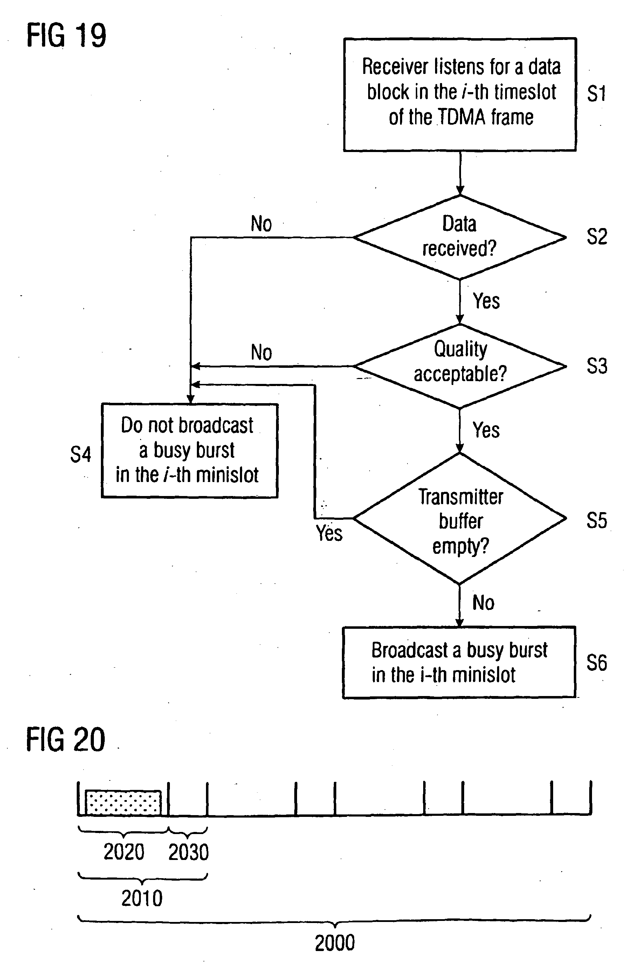

The behavior of a corresponding BB-TDMA receiver is illustrated in the flowchart in Fig. 19. The receiver listens for data blocks during every time slot of the TDMA frame in a first step S1. If data is received in a second step S2 the receiver verifies the reception quality of the data block in a third step S3. If the reception quality was satisfactory it proceeds with step S5, where it verifies if the transmitter still has data in its buffers. The transmitter buffer state verification is done on the basis of the signaled transmitter buffer state (STBS) from the transmitter. If the transmitter still has data in its buffers, the receiver would transmit a busy burst in the i-th busy signal time slot in step S6, in order to acknowledge the successful reception of the data block transmission of the i-th payload signal time slot of the current TDMA frame. If the receiver does not receive any data, if it receives data with dissatisfactory quality, or if the transmitter buffer is empty and the transmitter has succeeded its transmission, the receiver would not broadcast a busy burst in the i-th mini slot anymore, as shown in step S4.

The basic time structure of a BB-TDMA frame is depicted in Fig. 20 showing a BB-TDMA frame 2000 that is composed of four time slots 2010, of which each is composed of a payload time slot 2020 and a busy signal time slot 2030. As indicated in Fig. 20, there is a data block transmission during the payload time slot 2020, however there is no busy signal response during the associated busy signal time slot 2030 from an intended receiver. This means that the transmitter reverts to contention mode. However, if the data block transmitted during the payload time slot 2020 was the last data block in the transmitter buffer, then it may as well have succeeded with its transmission and no busy signal for acknowledging the transmission of the last data block of the transmit buffer is necessary.

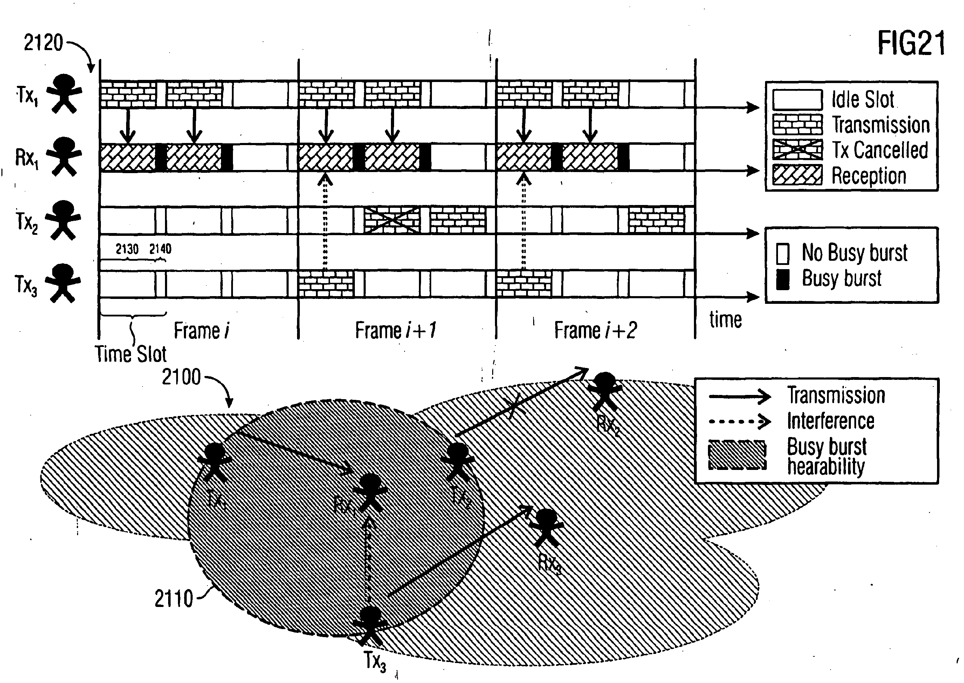

A conventional communication sequence according to the BB-TDMA protocol is illustrated in Fig. 21 showing a communication scenario 2100 where three transmitters $Tx_1$, $Tx_2$ and $Tx_3$ attempt to communicate with the three receivers $Rx_1$, $Rx_2$ and $Rx_3$, i.e. setting up three transmitter-receiver pairs, $Tx_1$-$Rx_1$, $Tx_2$-$Rx_2$ and $Tx_3$-$Rx_3$. Solid arrows indicate that there is already an active transmission between transmitter $Tx_1$ and receiver $Rx_1$,- as well as between transmitter $Tx_3$ and receiver $Rx_3$. A dotted arrow between transmitter $Tx_3$ and receiver $Rx_1$ indicates that the transmission of $Tx_3$ causes interference for the receiver $Rx_1$. The reason why $Tx_3$ is transmitting although there is a communication going on between transmitter $Tx_1$ and receiver $Rx_1$ already, is that the transmitter $Tx_3$ is outside the hearability region of the busy burst or busy signal, which is broadcast by receiver $Rx_1$. The hearability region of the busy burst of the receiver $Rx_1$ is indicated by a dotted circle 2110 in Fig. 21. Moreover, Fig. 21 depicts a communication sequence 2120 between the three transmitters $Tx_1$, $Tx_2$ and $Tx_3$ and at the receiver $Rx_1$. In the communication sequence 2120 three radio frames are shown, Frame i, Frame i+1, and Frame i+2. Each radio frame is composed of three time slots, of which each is composed of a payload signal time slot 2130 and a busy signal time slot 2140. During Frame i transmitter $Tx_1$ transmits data blocks during the first and second payload signal time slots. The receiver $Rx_1$ receives the two data blocks during the first and second payload signal time slots of Frame i and acknowledges the successful reception of the data blocks during the first and second busy signal time slots in Frame i, indicated in Fig. 21 by the black bars in the busy signal time slots in Frame i.

During Frame i, transmitter $Tx_3$ is already in contention mode determining whether the first payload signal time slot in Frame i is occupied or not. Since the transmitter $Tx_3$ is outside the hearability region of the busy signal of receiver $Rx_1$, it does not detect the busy signal of $Rx_1$ during the first busy signal time slot of Frame i, and consequently starts transmitting data to receiver $Rx_3$ during the first payload signal time slot of Frame i+1. Since transmitter $Tx_3$ is still outside the hearability region of the busy signal of receiver $Rx_1$, it also keeps using the first payload time signal time slot in Frame i+2. The situation is different for the transmitter $Tx_2$. $Tx_2$ was in contention mode during Frame i. Since $Tx_2$ is within the hearability region of Rx1, it detects the busy signal in the second busy signal time slot during Frame i and therefore cancels a scheduled transmission during the second payload signal time slot in Frame i+1.

Therefore the transmitter $Tx_2$ does not schedule another transmission during the second payload time slot in Frame i+2 as well. The transmitter $Tx_2$ also transmits during the third payload signal time slot in Frame i+1, however this payload signal time slot is not occupied by receiver $Rx_1$ and thus it does not transmit a busy signal in the associated busy signal time slot, and therefore transmitter $Tx_2$ keeps using the third payload time slot also in Frame i+2.

A problem of the BB-TDMA protocol is that support of the quality of service is almost not possible. For BB-TDMA the receiver transmits a busy burst if a block of data is received with acceptable BER (bit error rate) and if there are succeeding data blocks scheduled for transmission, and it transmits no busy burst otherwise. If no busy burst is transmitted due to poor BER, the transmitter has to acquire a new channel, which can cause long delays.

These unpredictable long delays make the use of delay critical services with BB-TDMA almost impossible.

With the conventional BB-TDMA it is not possible to support for example voice over IP (VoIP) services efficiently, as no mechanism is in place to control the latency of the data blocks. Additionally, the busy burst is only a binary response and transmission is aborted if the link quality between a transmitter and a receiver deteriorates below a certain quality threshold. Since the transmitter has to revert to contention mode and attempts to access the receiver from scratch, another delay is introduced. Furthermore, with this mechanism a potential transmitter, upon detecting a busy burst from any user, refrains from transmission, irrespective of the relative delay requirements between itself and the user causing the transmission of the busy burst. With the current protocol it is therefore very possible that a best effort user, for example transmitting a high amount of delay uncritical data, can seize a channel for a prolonged period of time, bearing other users, potentially utilizing delay intolerant services, from this channel. Therefore, a major disadvantage of the BB-TDMA protocol is the unfairness, which is introduced by the conventional scheme, acting in a first come first serve manner without considering different quality of service requirements.

Another important point about nowadays wireless services is that with the increasing demand for multi media services, the packet data traffic to be served in wireless systems becomes more and more heterogeneous. This heterogeneity relates to delay tolerance, data rates, allowed packet or bit error rates, peak to average throughput, uplink/downlink symmetry, mobility, etc. Furthermore, due to the scarcity of the radio frequency spectrum, the utilization, i.e. the spectrum efficiency, has to be significantly increased. The main problem is the radio propagation and the pathloss on the wireless channel, which generally is subject to time varying multipath propagation (Rayleigh fading, small scale fading) and location dependent attenuation (shadow fading, large scale fading). With the conventional BB-TDMA protocol there is no possibility to adapt the transmission to the varying channel conditions, which is a major disadvantage for the BB-TDMA protocol if it is utilized for delay critical and also error intolerant services. One of the key problems is that a transmitter in such a network needs to get physical layer information and quality of service information from its intended receiver and vulnerable receivers in a vicinity, for example channel state information and status information, as only this enables the transmitter to carry out respective radio resource management strategies and link adaptation decisions. Adding to the problem with the interference conditions being different at each receiver due to their spatial separation and with the properties of the radio propagation. Furthermore, with BB-TDMA an efficient management of the control signaling resources is not possible. This is especially disadvantageous, since the signaling is necessary to provide timely and reliable transmission of control information.

Supposing an ongoing transmission from a transmitter $Tx_m$ to a receiver $Rx_n$, denoted by link (m, n), then in the conventional busy signal concept, a new transmitter $Tx_i$ may establish a link with $Rx_j$ if the interference it would cause to the already existing link (m, n) is below a certain threshold $I_{thres}$. Before transmitting, $Tx_i$ checks the usability of channels based on the following key equation:

$$\left(\frac{I_i^b}{T_n^b}\right) T_i^d \leq I_{thres}, \qquad (1)$$

where $I_i^b$ is the received busy signal power at $Tx_i$ impinging from $Rx_n$, $T_n^b$ is the transmitted busy burst power of $Rx_n$, and $T_i^d$ is the transmitted data signal power of $Tx_i$. In this case $T_n^b$ is to be fixed and must be known at a new transmitter $Tx_i$. If, furthermore, $T_n^b = T_i^d$ is assumed, then the channel can be used, if $I_i^b \leq I_{thres}$. If the received busy burst power is above the threshold, the channel is not accessed. This results in a hard and binary decision on the usability of a particular channel, which potentially causes unnecessary delays and limits the quality of service support of the protocol. As a consequence, this mechanism provides little flexibility if, for example, some receivers are more tolerant to interference and delays.

In WO 2004/100461 A1, a method of communicating messages among a number of radio communication devices via a communications medium is described. Within the method of communicating each of the messages comprises a message header and a message payload. The method comprises transmitting the message header of a first message, where the first message is to be transmitted from a first one of the number of radio communication devices to at least a second one of the number of radio communication devices at a first power level, which is high enough to enable each of the number of radio communication devices to receive the message header. The transmission power for the message header is determined in a way, such that it is ensured that the message header is received by all communication devices of the communication system. Furthermore, the method of communicating messages comprises a step of transmitting the message payload of the first message at a second power level determined separately from the first power level to be high enough to enable the second radio communications device to receive the message payload. Hence, the transmission power for the payload is determined in a way that only the communication devices to which the payload is addressed can receive the payload message.

EP 1 628 446 A1 describes a method for transmitting information through a communication link. In a communication system, and in particular a wireless communication system according to the ultra-wide band technology, information is transmitted from a transmitting device to a receiving device through a communication link. The receiving device monitors the link quality of the communication link and if the link quality diverts from a predefined quality of service parameter values, sends a respective link quality notification to the transmitting device in order to inform the transmitting device on the present status of the link quality and to instruct the transmitting device to adapt the data rate and/or the transmit power accordingly, so as to improve the link quality.

In EP 1 526 685 A1, an inter-cell interference mitigation technique using reservation indicators is described. The technique relates to a communications network comprising a plurality of stations for transmitting and receiving signals, wherein a data signal is transmitted by a transmitting station as a series of data packets. In order to avoid transmission conflicts and particular inter-cell conflicts in a cellular TDMA communications network, it is proposed that a reservation indicator is transmitted by a receiving station for reception by transmitting stations, said reservation indicator indicating after the last data packet has been received with acceptable interference from said transmitting station and/or if a data transmission resource has been reserved by said receiving station for reception of the next data packet from said transmitting station. In a preferred embodiment, the reservation indicator indicates the reservation by the receiving station of a data time slot; all the stations, even if currently served are different base stations/access points, etc., will not transmit in this data time slot in the next frame if they have listened to said reservation indicator.

In Omiyi P. et al, "Maximising spectral efficiency in 4th generation OFDM/TDMA TDD hybrid cellular mobile /ad-hoc wireless communications", VTC-Spring 2004, Milan, Italy, the authors present a trategy to maximize spectral efficiency in the fourth generation OFDM/TDMA TDD wireless communications with 100% frequency reuse. The proposed method involves permitting peer-to-peer communications at the edges of cells within cellular mobile infrastructures and employing a medium access control protocol, denoted as a channel-sensing TDMA TDD, to jointly minimize intercellular interference and efficiently coordinate ad hoc communication. Channel-sensing TDMA TDD employs a modified busy-tone broadcast/channel-sensing mechanism to avoid and mitigate high interference scenarios. Simulation results show significant improvements in system capacity and spectral efficiency from the application of this approach when compared to conventional concepts.

EP 1289179 A1 provides a wireless telecommunication network comprising a first terminal and a second terminal, the first terminal including a receiving stage and a processor operative to process signals received from the first terminal and to determine a received signal quality. The second terminal also includes a transmitter operative to send a feedback signal dependant upon the received signal quality to the first terminal provided the change and received signal quality is determined as being more than a predetermined amount.

It is the objective of the present invention to provide an improved concept for BB-TDMA protocol based communication systems in order to effectively support quality of service mechanisms and enable an efficient management of the radio resources.

This objective is achieved by a transmitter apparatus according to claim 1, a receiver apparatus according to claim 16, a method for transmitting according to claim 14, a method for receiving according to claim 27, or a computer program according to one of the claims 15 or 29.

The present invention provides a transmitter apparatus, comprising a busy signal receiver for receiving a busy signal in a predefined busy signal time slot of a current frame, the signal in the busy signal time slot having information dependent on an interference power or a payload signal reception power related to a receiver, the busy signal receiver being adapted to extract the information dependent on the interference power or the payload signal reception power. The transmitter apparatus further comprising a controller module for adjusting a transmission power dependent on the information extracted from the signal in the busy signal time slot and a transmitter module for transmitting a payload signal with the adjusted transmit power in a payload signal time slot associated with the busy signal time slot in a subsequent frame.

Furthermore, the present invention provides a receiver apparatus, comprising a receiver module for receiving a payload signal in a payload signal time slot and a quality estimator for estimating a reception quality of the received payload signal. The receiver apparatus further comprising a controller module for determining information on an allowable interference power and a busy signal transmitter for transmitting a busy signal in a busy signal time slot associated with the payload signal time slot, when the reception quality is above a quality threshold, the busy signal transmitter being adapted to include information depending on an interference power or a payload signal reception power in the payload signal time slot in the busy signal.

Moreover, the present invention provides a method for transmitting, comprising the steps of receiving a busy signal in a predefined busy signal time slot of a current frame, the signal in the busy signal time slot having information on an interference power or a payload signal reception power related to a receiver, the busy signal receiver being adapted to extract the information on the interference power or the payload signal reception power, and a step of controlling a transmit power depending on the information extracted from the signal in the busy signal time slot and transmitting a payload signal with the adjustable transmit power in a payload signal time slot associated with the busy signal time slot in a subsequent frame.

Furthermore, the present invention provides a method for receiving, comprising the steps of receiving a payload signal in a predefined payload signal time slot and estimating the reception quality of the received payload signal. Furthermore the method comprises a step of determining information on an allowable interference power and transmitting a busy signal in a busy signal time slot associated with the payload signal time slot, when the reception quality is above a quality threshold, the busy signal being generated such that it includes information about an interference power or a payload signal reception power in a payload signal time slot.

Moreover, the present invention provides computer programs having program codes for performing the inventive methods, when the program codes run on a computer.

The present invention is based on the finding that significant improvements can be achieved by including further information into the busy signal in a communication scenario using a BB-TDMA component. By including for example status information on the reception quality of a payload signal reception from a payload signal transmitter in a busy signal that in turn is received by the transmitter of the payload signal, the transmission can be adapted to the actual propagation condition. Therefore, the interference condition in a network can be controlled, respectively quality of service (QoS) measures can be used to adjust the transmission parameters of users carrying out different services. By including additional information into the busy signal an efficient means for managing the radio resources of the network is enabled.

This invention therefore provides a protocol extension for BB-TDMA enabling efficient management of quality of service classes, interference levels, user priorities, radio resource utilization, etc.

The present invention overcomes the limitations of conventional BB-TDMA of high delays, unfairness between users or user classes, unfairness between different service classes, busy burst transmit power efficiency, payload signal transmit power efficiency, overall spectral efficiency etc. Furthermore, the present invention exploits the benefits of link adaptation. This can be achieved without any need for additional capacity or signaling overhead. In comparison to the conventional approach, the new invention maximizes the use of the already existing busy burst signaling overhead to achieve quality of service management and high spectral efficiency in a simple, decentralized manner. The present invention is therefore applicable for cellular, ad hoc, multi-hop and the like networks.

Further advantages of the present invention are an effective means to manage co-channel interference, which also enables quality of service support, link adaptation, and additional system capacity. The present invention can be implemented without any additional signaling overhead or additional bandwidth- taking advantage of an implicit signaling scheme. The present invention supports decentralized medium- access and channel allocation. With the present invention the transmit power of any_number of potential interferers on the same channel can be set by broadcasting a single busy burst. Another advantage of the present invention is that it has low complexity and can be implemented easily.

Comparing to the conventional BB-TDMA protocol no busy signal threshold optimization in order to detect the presence of a busy signal is needed. One embodiment of the present invention can be based on a single network constant. This constant could potentially be determined from a few known system parameters such as a maximum transmit power, a minimum transmit power, a minium and/or a maximum absolute interference tolerance level, etc.

The present invention further provides a novel feedback mechanism which can be exploited for dynamic feedback transmission to increase the spectral efficiency in a multiple link and multiple user environment and to support quality of service requirements of different services. Basically, any receiver in a network can transmit either explicitly or implicitly control information to an intended user as well as to potential interferers in order to provide efficient quality of service support. The channel reciprocity of a time division duplex scheme is exploited by the implicit signaling variant of the present invention. Opposed to a fixed allocation of channels for control information, an efficient dynamic channel assignment mechanism for control information is brought up in place in the present invention, the control information is then protected by means of the busy tone transmission principle.

Preferred embodiments of the present invention are described in detail with respect to the following Figures, in which:

Fig. 1 shows an embodiment of the inventive transmitter apparatus;

Fig. 2 shows an embodiment of the inventive receiver apparatus;

Fig. 3 shows another embodiment of the inventive transmitter apparatus;

Fig. 4 shows another embodiment of the inventive receiver apparatus;

Fig. 5 shows a flowchart of an embodiment of an inventive enhanced BB-TDMA receiver apparatus;

Fig. 6a) shows an example scenario of an embodiment for inventive link adaptation through busy burst signaling;

Fig. 6b) shows an example scenario of an embodiment in a time-out scenario for inventive link adaptation with busy burst signaling;

Fig. 7 shows a flowchart of an embodiment of the inventive enhanced BB-TDMA transmitter in contention mode;

Fig. 8 shows a flowchart of an embodiment of an inventive enhanced BB-TDMA transmitter in reservation mode;

Fig. 9 shows an exemplified scheme of another embodiment of the present invention with busy signal transmission power adaptation;

Fig. 10 illustrates an embodiment of the present invention in an example scenario of piggy-backed busy burst information for transmitters and interferers;

Fig. 11 shows an embodiment of the present invention using an example scenario of piggy-backed signalling of priority with busy burst;

Fig. 12 shows an embodiment of the present invention using an example scenario for piggy-backed signalling of priority with busy burst;

Fig. 13 shows an embodiment of the present invention using an example of link protection established by a busy burst;

Fig. 14 shows an example scenario to illustrate the inventive mechanism of busy burst transmit power and payload signal transmit power adjustment;

Fig. 15 shows a viewgraph, visualizing the interference tolerance and the busy tone power according to one embodiment of the present invention;

Fig. 16 shows a visualization of a busy tone receive power, a maximum possible data transmit power, a busy tone transmit power and a receiver sensitivity level of one inventive embodiment;

Fig. 17 shows a flowchart of a conventional BB-TDMA transmitter in contention mode;

Fig. 18 shows a flowchart of a conventional BB-TDMA transmitter in reservation mode;

Fig. 19 shows a flowchart of a conventional BB-TDMA receiver;

Fig. 20 shows the conventional structure of a BB-TDMA frame.

Fig. 21 shows a conventional communication scenario following the BB-TDMA protocol.

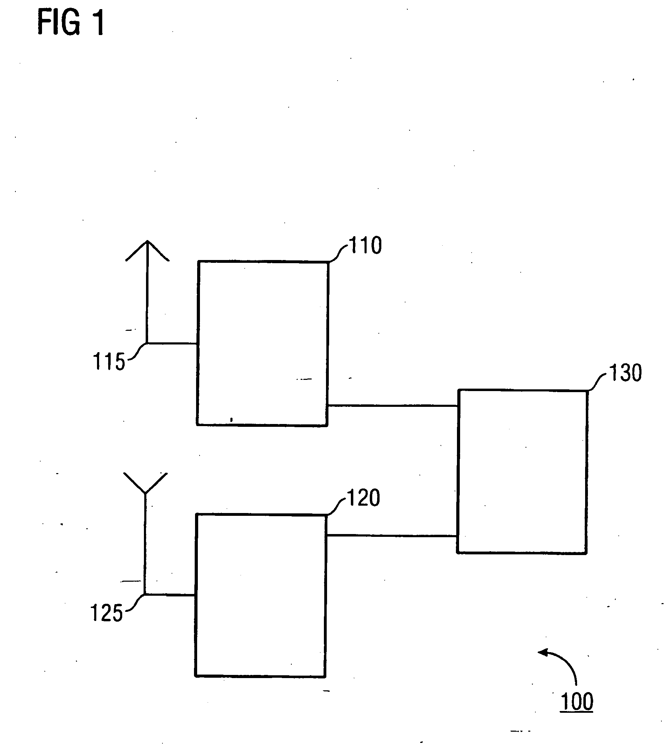

Fig. 1 shows an embodiment of the present invention, being a transmitter apparatus 100, comprising a transmitter module 110 with a transmit antenna 115, a busy signal receiver 120 with a receive antenna 125, and a control module 130.

The transmitter apparatus 100 depicted in Fig. 1 comprises a transmitter module 110, having an adjustable transmitter characteristic for transmitting a payload signal in a predefined payload signal time slot, a busy signal receiver 120 for receiving a busy signal in a predefined busy signal time slot; the busy signal including information being dependent on a reception quality of a transmitter of the busy signal; and a controller module 130 for adjusting the adjustable transmitter characteristic on the basis of the reception quality information.

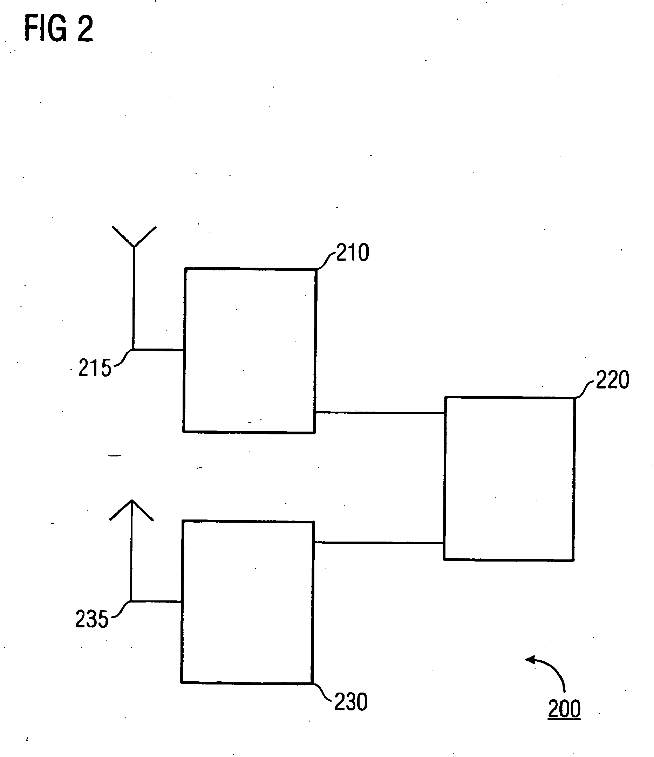

Fig. 2 shows an embodiment of the inventive receiver apparatus 200. The receiver apparatus 200 as depicted in Fig. 2 comprises a receiver module 210 with a receive antenna 215, a quality estimator 220, and a busy signal transmitter 230 with a transmit antenna 235.

The receiver apparatus 200 as illustrated in Fig. 2, comprises a receiver module 210 for receiving a payload signal, a quality estimator 220 for estimating a reception quality of the received payload signal, and a busy signal transmitter 230 for transmitting a busy signal in a predefined busy signal time slot, the busy signal transmitter being adapted for generating the busy signal such that the busy signal includes information being dependent on the reception quality.

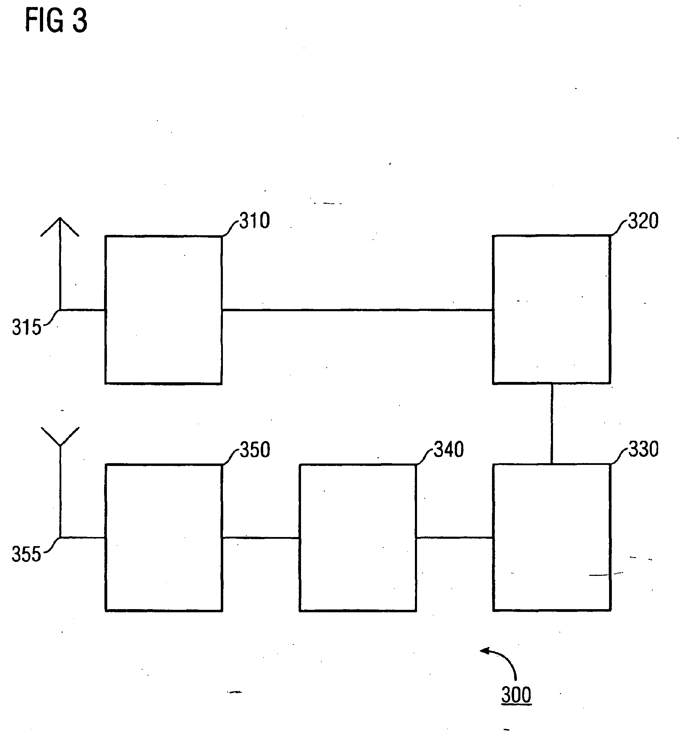

Fig. 3 depicts another embodiment of an inventive transmitters apparatus. The transmitter apparatus 300 shown in Fig. 3 comprises a transmitter module 310 with a transmit antenna 315, a transmission decider 320, a busy signal information interpreter 330, a busy signal information extractor 340, and a busy signal receiver 350 with a receive antenna 355.

The transmitter apparatus 300 as illustrated in Fig. 3 comprises a busy signal receiver 350 for receiving a busy signal from a first receiver in a busy signal time slot associated with the payload signal time slot in a current frame, the busy signal having additional information useful for a transmitter transmitting the payload signal in the payload signal time slot or a different transmitter not using the payload signal time slot. The transmitter apparatus 300 further comprises a busy signal information extractor 340 for extracting the additional information useful for the different transmitter and an information interpreter 330 for interpreting the extracted information. The transmitter apparatus 300 further comprises a transmission decider 320 for deciding to perform a transmission of a scheduled payload information to such a receiver, when the information interpreter generates a transmission allowed indication, and a transmitter module 310 for performing a transmission of the scheduled payload information in a payload signal time slot of a later frame, when a transmission decision exists.

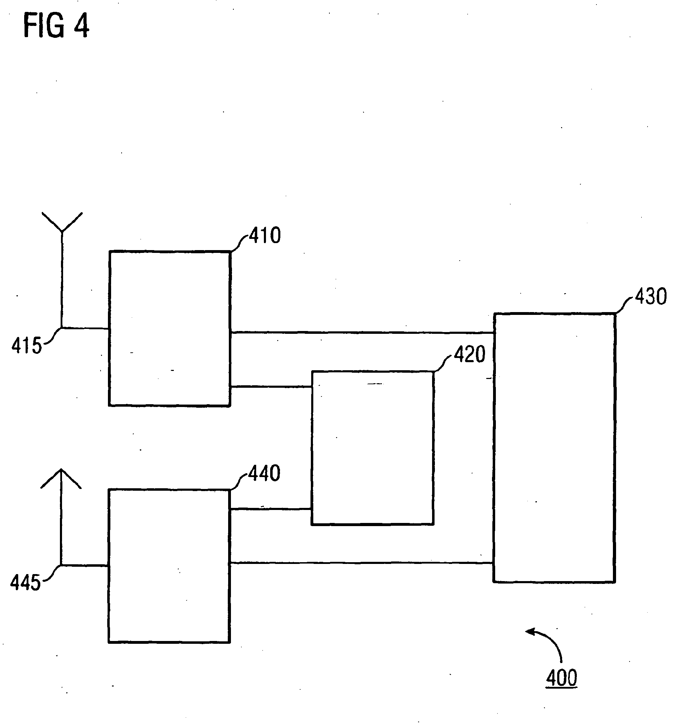

Another embodiment of an inventive receiver of the present invention is illustrated in Fig. 4 showing a receiver apparatus 400 comprising a receiver module 410 with a receive antenna 415, a quality estimator 420, a control module 430, and a busy signal transmitter 440 with the transmit antenna 445.

The exemplary receiver apparatus 400 shown in Fig. 4, comprises a receiver module 410 for receiving a payload signal in a payload signal time slot. It further comprises a quality estimator 420 for estimating reception quality of the received payload signal and a control module 430 for determining information on an allowable interference power. The receiver apparatus 400 further comprises a busy signal transmitter 440 for transmitting a busy signal and in a busy signal time slot associated with the payload signal time slot, when the reception quality is above a quality threshold, the busy signal transmitter being adapted to include information about an interference power or a payload signal reception power in the payload time slot.

In order to enable quality of service support over a wireless link, link rate adaptation is a very powerful tool. Instead of choosing for example coding and modulation schemes or a transmit power designed for the worst case scenario, the receiver can request changes in modulation, coding rate, transmission power etc., according to an embodiment of the present invention, in order to maintain an acceptable bit error rate at a receiver. An essential requirement for link rate adaptation is feedback from the receiver apparatus to the transmitter apparatus, indicating that a change for example in modulation, coding, transmission power, etc. is necessary.

The BB-TDMA protocol for decentralized interference avoidance in multi-carrier/single-carrier TDD-based systems is therefore extended to allow for decentralized multi-user link adaptation for quality of service support, according to an embodiment of the present invention. For this enhancement an embodiment of the present invention concerns modifying the busy burst signaling mechanism to accommodate link rate adaptation on the intended link. Another embodiment of the present invention concerns modifying the busy burst signal to convey quality of service information for other co-existing links.

Furthermore, the present invention provides a generalization of both embodiments, and both embodiments are based on enhancing the BB-TDMA protocol. The principle introduced by the present invention applies to single-carrier as well as to multi-carrier systems. Opposed to the conventional BB-TDMA protocol, where the busy burst is used as a simple acknowledgement, the busy burst can for example be extended to include link rate adaptation feedback. The transmitter is then able to maintain its reservation, even under poor link conditions, by simply adjusting the transmission/coding rate or other physical layer parameters as for example the transmit power. Another example for information that could be included in the busy burst in order to adapt the link rate is to use different physical layer modes. Physical layer modes are also known as transport formats, which represent combinations of a coding rate, a modulation scheme, a number of sub-carriers, a transmission power, etc. With the ability to control the link rate as given by the present invention, it is now possible to carry out quality of service support for different service classes and to manage interferences more efficiently, for example by utilizing power control.

For example a user utilizing a rather low data rate, for example a delay critical service such as a voice call (voice over IP), can be allocated to a transport format with a low data rate and low latency. Whereas a user utilizing an interactive and background service, for example in a web browsing or emailing session, a transport format corresponding to a rather high latency is used, since the interactive and background services are not delay critical. Furthermore a user with a delay critical service, for example a voice over IP user, can be prioritized by the receiver to a user who carries out an interactive and background service.

In the conventional BB-TDMA protocol, when a potential transmitter detects a busy burst, it is unaware of the delay requirements and hence the interference tolerance of the vulnerable receiver. It therefore simply refrains from transmitting. The present invention provides a busy burst conveying additional quality of service/interference tolerance information. Potential other transmitters can take advantage of this information, in effect, at what power level they can transmit protecting a quality of service performance at the vulnerable receiver. The present invention therefore extends the link adaptation process, from a single link to a multi-user link adaptation, with the transmission rate adjusted to protect the desired link quality, where the transmit power or other physical layer parameters of the link are adjusted to protect the quality of other links. One exemplary way to implement the multi-user link adaptation signaling on the busy burst, without increasing the signaling overhead of the conventional BB-TDMA protocol, is to convey the quality of service/interference tolerance information using the busy burst power and the link rate adaptation information through digital modulation on the same busy burst channel and within the same bandwidth as the conventional approach.

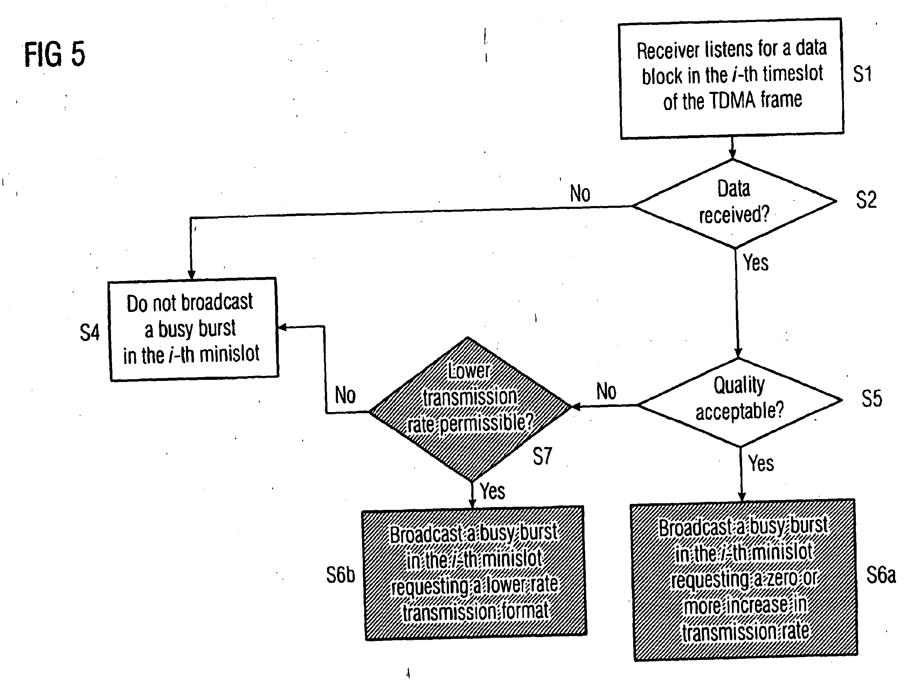

The flowchart of an enhanced BB-TDMA receiver is shown in Fig. 5 according to an inventive embodiment. Blocks which are different to the conventional BB-TDMA protocol, which is depicted in Fig. 19 are highlighted. The flowchart in Fig. 5 shows that if a data block was received with a reception quality, which is not acceptable by the receiver, an additional step S7 is introduced, where the receiver checks if it is permissible to lower the transmission rate. If lowering the transmission rate is permissible the receiver broadcasts a busy burst in the i-th mini slot, respectively busy signal time slot, requesting to lower the transmission rate, respectively by requesting a transmission format that translates into a better reception quality of the payload data, i.e. a lower transmission rate at the benefit of a lower coding rate. This step is indicated by step S6b in Fig. 5. If lowering the transmission rate is not permissible, for example because the service data rate requires a minimum rate that is already reached and no quality improvements can be achieved through modification of any other physical layer parameters, the receiver behavior corresponds to the conventional receiver behavior and no busy burst is broadcast. If the receiver receives a data block with an acceptable quality, a busy burst is broadcast in the i-th mini slot and depending on the reception quality, the receiver can even request to increase the transmission rate. This step is indicated in step S6a in Fig. 5.

Whenever a data block is received with poor reception quality, where the reception quality is, for example evaluated by a bit error rate (BER), from a transmitter with a non-empty buffer, rather than loosing the reservation and going back to contention mode, the enhanced scheme depicted in Fig. 5 can decide to lower the transmission rate, for example by changing the coding scheme and/or changing the modulation scheme or to modify any physical layer parameters, in order to improve the receive quality for example through power control. These changes are signaled to the transmitter on the busy burst in the associated busy signal time slot. The decision to lower the data rate is made in the receiver for the case the quality of service requirements allow to lower the transmission rate. If a data block is received with acceptable reception quality, then this can be signaled on the busy burst to inform the transmitter that it can either maintain its current transmission rate or even increase it. In another embodiment the transmitter may reduce its transmission power if the reception quality at the receiver is high, so the overall interference level is reduced and an acceptable reception quality is maintained, enabling higher system capacity through interference avoidance.

One further embodiment to carry out rate adaptation is to introduce different physical layer modes or transmission formats, which are sorted in ascending order with respect to the net data rate in a table, where a physical layer mode comprises a combination of modulation, coding, number of payload signal time slots, number of sub carriers, transmit power etc. A reduction in a transmission rate corresponds then to decrementing the physical layer mode by a specified number of steps in the table.

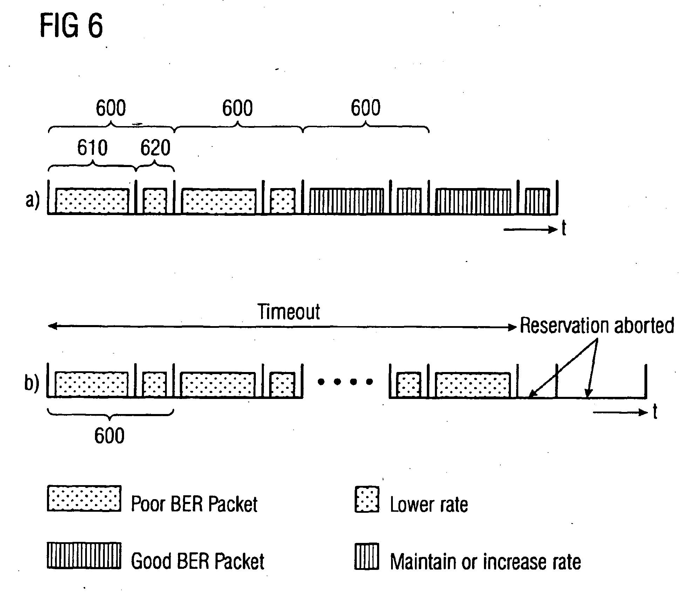

Fig. 6a) shows a sequence of time slots 600 each composed of a payload signal time slot 610 and a busy signal time slot 620. Fig. 6a) shows further a data block being received with poor quality, indicated by the dotted area during the first time slot, but nevertheless a busy burst is broadcast by the receiver, thus the reservation is maintained. The busy burst broadcast by the receiver upon reception of the poor quality data packet indicates that the transmitter should lower its data rate, which is also indicated by the dotted area. Piggy-backed link rate adaptation information is conveyed requesting for a reduction in transmission rate. This process is continued until a block is decoded with acceptable quality or until a maximum time-out limit is reached. In Fig. 6a) this is indicated by the first two time slots, in which data packets of poor reception quality are received and the associated busy burst signals convey the associated requests to decrease the data rate. During the third and fourth time slot in Fig. 6a), the reception quality of the payload data has improved, which is indicated by the striped areas. As a consequence the busy burst now indicates to maintain the data rate, which is also indicated by the striped area. The example shown in Fig. 6a) shows that if a block can be transmitted successfully within a maximum time-out period, the transmitter is informed of this, for example with a piggy-backed link rate adaptation feedback using the busy burst, which is also used to request a zero or more increase in data rate. The transmitter then transmits the next block of data at a requested rate. Fig. 6b) shows a similar scenario, except in this case, the receiver is unable to decode a data block with acceptable reception quality within the time-out period and so the reservation is aborted. In this scenario the reception quality of the payload data does not improve enough during the time-out period. The present invention foresees an adjustable time-out period in dependence on the transmission scenario or the service class of the user, upon which the reservation is aborted and the transmitter reverts into contention mode.

In another embodiment of the present invention additionally to link rate adaptation information conveyed by the busy burst, receiver quality of service/interference tolerance information is also signaled on the busy burst of an enhanced scheme. In a link adaptive system, the greater the delay tolerance or the lower the minimum data rate requirement on a certain link, the more interference it can tolerate. This is because the transmission rate can be reduced to maintain an acceptable bit error rate, respectively an acceptable reception quality. The delay tolerance on the minimum data rate requirement of a certain link simply maps to an interference tolerance. Equivalently, independent on the other physical layer parameters, the transmission power can be adjusted in order to meet a certain bit error rate or reception quality requirement. One embodiment of the present invention is to signal information about all these parameters on the busy burst, in order to make efficient use of the available radio resources.

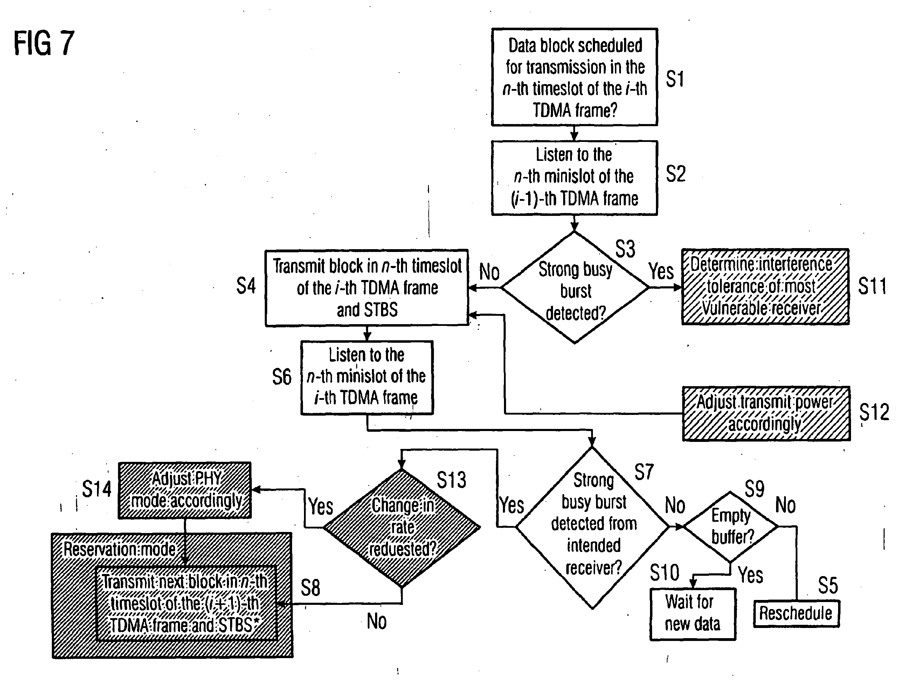

Fig. 7 depicts a flowchart of an embodiment of an inventive enhanced BB-TDMA transmitter in contention mode, blocks which are different from the conventional BB-TDMA transmitter depicted in Fig. 17 in contention mode are highlighted. Similar to the conventional approach, the transmitter, before transmitting in contention mode in a scheduled time slot, which is indicated by step S1 in Fig. 7, listens for potential busy burst from receivers using its intended time slot, according to step S2 in Fig. 7. When the transmitter detects busy bursts from vulnerable receivers, which is done in step S3, the transmitter attempts to adjust its transmit power to a level that would be acceptable to the most vulnerable receiver using its intended time slot, which is indicated by steps S11 and S12 in Fig. 7.

The transmitter then transmits the data block, as indicated in step S4, in which it includes its signal transmitter buffer status (STBS) and listens to the associated minislot of its used payload signal transmission slot. This is indicated in step S6 in Fig. 7. Furthermore, in Fig. 7 it is assumed in step S4 that the transmitter transmits the data block in the n-th time slot of the i-th TDMA frame and accordingly it listens to the n-th minislot or busy signal time slot of the i-th TDMA frame. Although, like the conventional BB-TDMA transmitter, the enhanced scheme of the present invention uses the busy burst from the intended receiver as an acknowledgement, unlike the conventional scheme, it also uses it as a means of the determining transmission rate for the next data block. The process of evaluating the information contained in the busy burst and adjusting the data rate is carried out in steps S13, S14, and S8 in Fig. 7.

After a strong busy burst was detected, the transmitter checks in step S13 whether a change in rate was requested or not. If a change in rate was requested, the physical layer parameters or physical layer settings are adjusted in step S14 according to the detected change request in rate from step S13. After the physical layer mode has been adjusted in step S14 the transmitter changes its mode into reservation mode, which is indicated in step S8 in Fig. 7. If in step S13 no change in rate is requested then the busy burst serves as a simple acknowledgement and the transmitter continues in reservation mode without any change in rate. This multi-user link adaptation increases the chances of a contention mode transmitter acquiring a reservation, by lowering the delay and ensuring fairness.

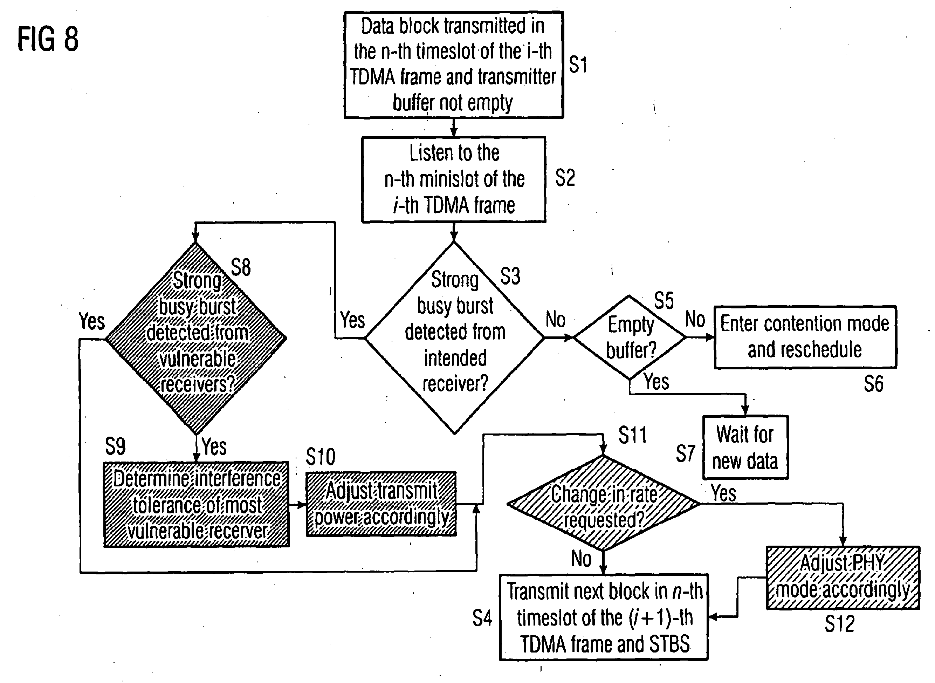

Figure 8 illustrates an embodiment of the present invention of an enhanced reservation mode of a BB-TDMA transmitter.

Blocks which are different to the conventional BB-TDMA reservation mode, which is depicted in Fig. 18, are highlighted. Unlike the conventional approach, the enhanced transmitter, after transmitting in its scheduled time slot as indicated in step S1 and Fig. 8, listens to potential busy bursts from vulnerable receivers using the same time slot and to the busy burst from its intended receiver. If a strong busy burst is detected from the intended receiver in step S3, the transmitter evaluates the busy bursts detected from vulnerable receivers as well in step S8. If strong busy bursts are detected from vulnerable receivers in step S8 the transmitter attempts to adjust its transmit power to a level that would be acceptable to the most vulnerable receiver, which is done in steps S9 and S10. In addition, like the conventional BB-TDMA transmitter, the enhanced schemes use the busy burst from the intended receiver as an acknowledgement. Unlike the conventional scheme, however, the transmitter also uses the busy burst as a means for determining the transmission rate for the next data block, in a similar manner to its contention mode operation as it was explained using Fig. 7.

If no strong busy bursts were detected from vulnerable receivers or if a strong busy burst was detected from a vulnerable receiver and the transmission power was adjusted accordingly the transmitter evaluates information from the busy burst of the intended receiver and adapts its transmission rate according to step S11 and S12. Again the transmission rate adjustment can be carried out, for example by maintaining a transmission format table that lists certain combinations of physical layer transmission characteristics as, for example coding schemes, modulation schemes, number of sub-carriers, frequency of sub-carriers etc. If no change request for the transmission rate was detected in step S11 from the intended receiver, the transmitter continuous in reservation mode with the corresponding transmission during the next TDMA frame according to step S4. The advantage of this exemplary embodiment of the present invention is that the multi-user link adaptation increases the chances for maintaining a reserved link, thus further minimizing delay and maximizing spectral efficiency, while ensuring fairness and enabling higher system capacity.

In another embodiment of the present invention the signaling of the enhanced busy burst scheme ideally does not introduce any signaling overhead compared to the conventional scheme. The rate adaptation information can be signaled as digitally encoded data, for example in a piggy-backed fashion on the busy burst, within the same busy burst signaling bandwidth as the conventional scheme. In a basic embodiment of the present invention, the busy burst can be used to carry only a single bit of information, telling the transmitter to decrease or to increase the transmission rate, setting the bit to zero could tell the transmitter to continue with the same data rate. Additionally, the delay tolerance or minimum rate requirement of a transmission in a link rate adaptive system is related to its interference tolerance. The busy burst can also be used to convey this information without any additional overhead, for example by adjusting the busy burst transmit power in relation to the maximum allowed interference power.

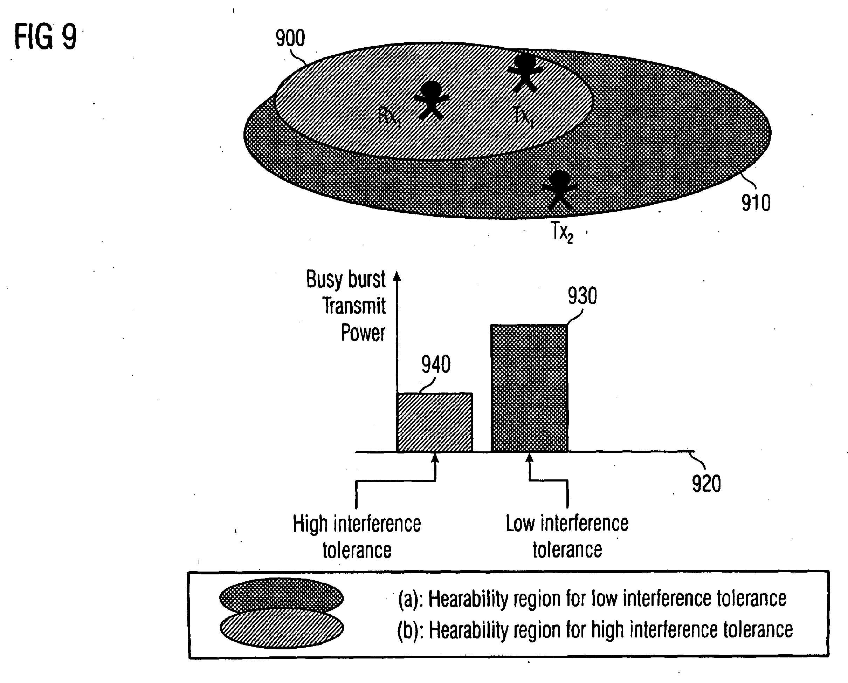

Fig. 9 shows a receiver $Rx_1$ and two transmitters $Tx_1$ and $Tx_2$. Furthermore two hearability regions for two different busy signal transmit power settings 900 and 910 are shown. The larger hearability region 910 corresponds to a higher busy signal transmit power setting as indicated in the transmission power diagram 920 in the bar graph 930. The smaller hearability region 900 corresponds to the lower busy burst transmit power setting indicated by the bar graph 940 and the busy burst transmit power diagram 920.

In one embodiment of the present invention, the lower the interference tolerance at the receiver, the higher the busy burst transmit power, in order to restrict more potential interferers. In the illustrated example in Fig. 9, when the interference tolerance is low, $Rx_1$ broadcasts a high power busy burst, which restricts the potential interferer $Tx_2$. However, when the interference tolerance is high, $Rx_1$ broadcasts a low power busy burst, which is only received by $Tx_1$, while not restricting channel access to the more distant user $Tx_2$. By employing combined digital modulation and busy signal power adjustments on the busy burst, the enhanced busy burst scheme can be implemented without any additional overhead from the conventional scheme. This, for example, also holds for OFDM (Orthogonal Frequency Division Multiplexing) systems.

Link adaptation techniques, such as adaptive modulations/coding, incremental redundancy or Chase combining as for example used in hybrid ARQ (ARQ = Automatic Retransmission Request) techniques, are used to adapt the transmission format to the varying channel conditions, these techniques aim at improving the performance on a single link. In an embodiment of the present invention, the impact of link adaptation on other links is taken into account. The crucial issue is to utilize information that resides in the physical layer not only to improve the quality on a single link, but to use this information for improving the quality on other links, for example through effective interference aware user scheduling and dynamic channel selection. Any entity in a network can therewith gain information about the interference tolerance of neighbouring entities and take this into account for scheduling, channel selection and transmission format selection. Again, this information can be used to carry out a more efficient radio resource management.

The present invention allows to realize these mechanisms in a decentralized manner, as these mechanisms are to be deployed in meshed networks, which use ad hoc and multi hoc communications or other forms of self-organizing networks. The busy burst can also be used to enable receivers to feedback general information to the corresponding transmitters and to provide other transmitters with the necessary information, to enable them to adjust their channel usage such that the receivers do not experience unacceptable performance degradations, such as poor quality of service or degraded data throughput. Since a centralized controller is not needed, efficient decentralized radio resource management and quality of service management is enabled. A TDD air interface with a busy burst channel, which is used to carry piggy-backed information as for example control information, dedicated to a corresponding transmitter as well as information dedicated to other potential transmitters in the neighbourhood is assumed. In this embodiment of the present invention, the busy signal is used to convey system relevant information in a two-fold manner, which is dedicated information directed to the intended transmitter and information broadcast to potential interferers, i.e. to transmitters in a vicinity.

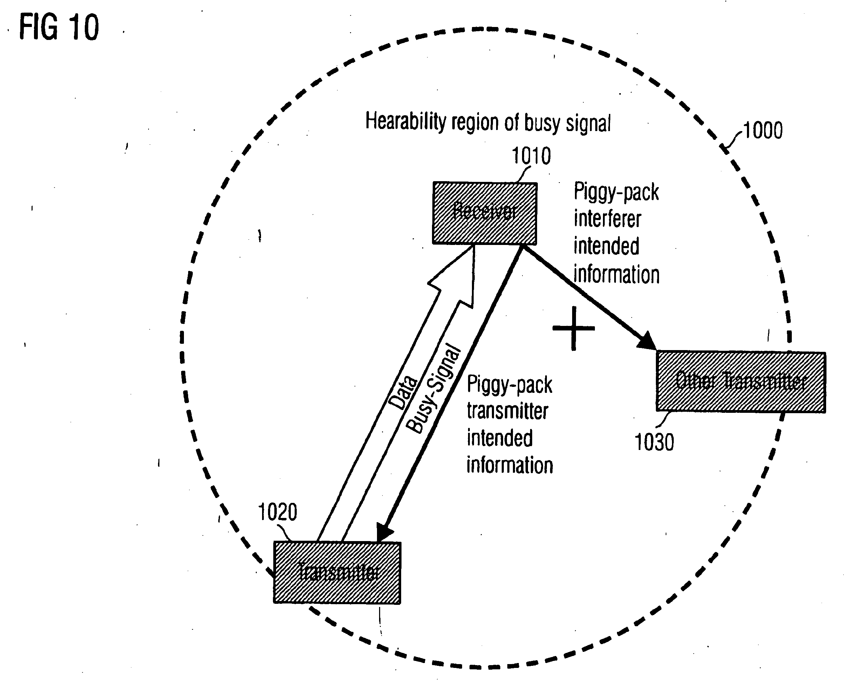

Fig. 10 shows an example scenario illustrating an embodiment of the present invention. In Fig. 10 the dotted circle 1000 shows the hearability region of a busy signal. Within this region, there is a receiver 1010 receiving data from a transmitter 1020 and broadcasting the busy signal. Within the hearability region 1000 there is another transmitter 1030, which does not transmit payload data to the receiver 1010, but receives the busy signal from the receiver 1010. The signalled information, which is piggy-backed on the busy burst, can be used for link adaptation, scheduling, dynamic channel selection, radio resource management, etc. by the intended transmitter 1020, however, the content of this information can also be used by other transmitters as 1030. The content of this information can vary according to the actual deployment scenario. Again, the additional information can be digitally modulated and carried explicitly or can be modulated in an analogous fashion being implicit. Potential information that can be included in the busy burst is, for example, channel state information on the link between the intended transmitter 1020 and the receiver 1010, channel state information on other links, which could be useful in point-to-multipoint scenarios, relative transmission priority and/or delay tolerance on other links, which could also be useful in point-to-multipoint scenario, tolerable interference levels, achieved signal-to-interference-and-noise-ratio levels, physical layer mode or transmission format change requests, channel or sub-channel change requests, transmit power change requests, channel statistics, etc.

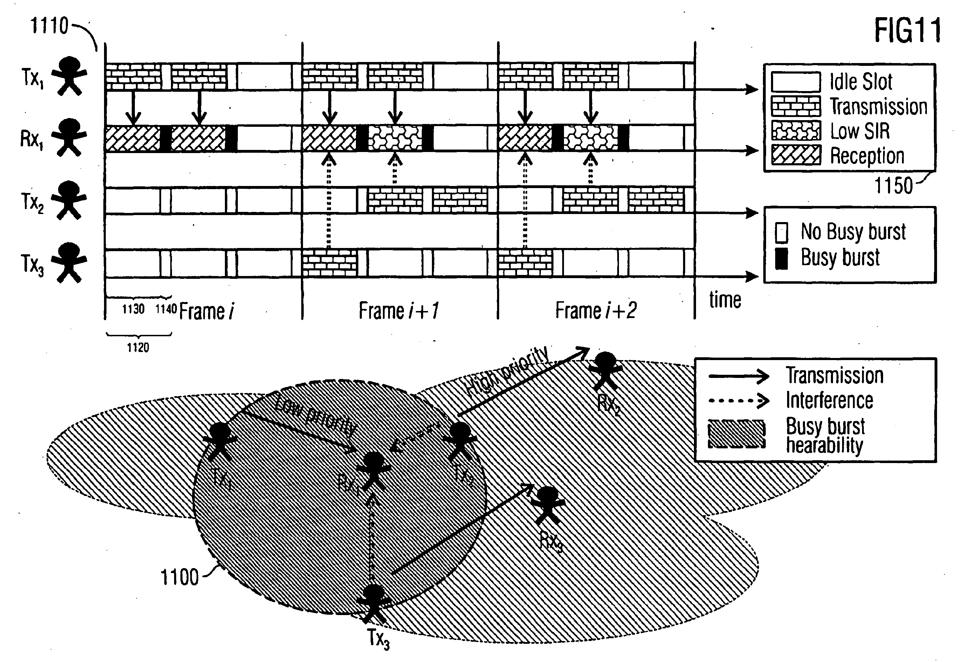

Fig. 11 shows an embodiment of the present invention using an example scenario with 3 transmitter-receiver pairs $Tx_1$-$Rx_1$, $Tx_2$-$Rx_2$, and $Tx_3$-$Rx_3$. Intended communication links are indicated by solid arrows, interference is indicated by dotted arrows. The busy burst hearability region of receiver $Rx_1$ is indicated by a dotted circle 1100. Furthermore, Fig. 11 shows a sequence of 3 radio frames 1110, Frame i, Frame i+1, and Frame i+2, for the receiver $Rx_1$ and the three transmitters $Tx_1$, $Tx_2$ and $Tx_3$. Each radio frame contains three time slots 1120, of which each is composed of a payload signal time slot 1130 and a busy signal time slot 1140. Busy signal time slots in which a busy burst is transmitted, are indicated by a black bar, busy signal time slots during which no busy burst is transmitted, are indicated by a white bar. The different signals during the payload signal time slots are indicated by the patterns shown in the legend 1150.

Fig. 11 shows an example for an embodiment of the-present invention with additional information piggy-backed on the busy burst. In this case, $Rx_1$ signals on the busy burst the transmission priority of the $Tx_1$-$Rx_1$ link to transmitters

$Tx_2$ and $Tx_3$ in its vicinity. $Tx_1$ transmits data in the first and second payload signal time slots of each frame and receives busy signal acknowledgments from $Rx_1$ in the associated first and second busy signal time slots of the frames. As in the case of the conventional scheme, $Tx_3$ detects a weak busy burst, and so starts transmitting regardless, since due to the channel reciprocity its interference to $Rx_1$ is also weak and has an negligible impact on the quality of service. $Tx_2$ detects a strong busy burst during Frame i in the first and second busy signal time slot and it determines from the piggy-backed information that it has a higher relative transmission priority than $Tx_1$. So $Tx_2$ transmits during the second payload signal time slot in Frame i+1. The different transmission priorities are indicated by the labelled transmission arrows in Fig. 11.

The result is that $Rx_1$ experiences a lower signal-to-interference-ratio in the second time slot of the second and third frames, since $Tx_2$ causes interference. Because the $Tx_1$-$Rx_1$ link is of a lower priority, it can tolerate the lower signal-to-interference-ratio, additional delays and/or lower data rates, to maintain acceptable error rates. A more precise example would be, if $Tx_1$ transmits background data to $Rx_1$ as, for example, during a web browsing or emailing session, while $Tx_2$ starts a voice call with $Rx_2$. As the web browsing or emailing session can tolerate higher delays, whereas the voice call between $Tx_2$ and $Rx_2$ is delay sensitive, the voice call gets assigned a higher priority and can therefore cause some degradation in the transmission between $Tx_1$ and $Rx_1$. However, the nature of a web browsing or emailing session is not as delay critical, therefore a user using a link corresponding to the one between $Tx_1$ and $Rx_1$ might not even notice any degradation in the actual application.

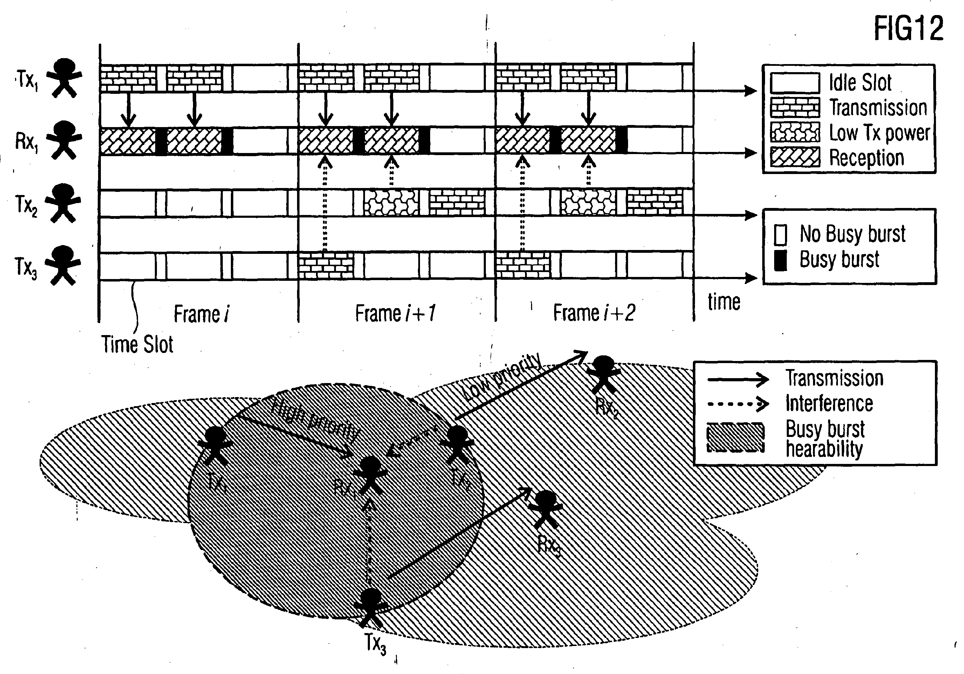

In Fig. 12 a similar scenario is depicted as in Fig. 11, however, priorities are inverted. The link between $Tx_1$ and $Rx_1$ has now a higher priority than the link between $Tx_2$ and $Rx_2$. Therefore, $Tx_2$ reduces its transmit power when transmitting in the same slot used by $Rx_1$ and $Tx_1$, thus, maintaining a high signal-to-interference-ratio at $Rx_1$, while exposing itself to a lower signal-to-interference-ratio and the possibility of additional delays and/or lower transmission rates. The control information transmitted to $Tx_1$ informs it that it can continue using the same slot in subsequent frames, it may also inform it to change its coding or modulation scheme or inform it of the channel state information on other links in a broadcast scenario.

The control information is broadcast on the same busy burst to $Tx_3$ and permits it to transmit on the same channel, which is the first time slot, colliding with the transmission between $Tx_1$-$Rx_1$. However, this may be with modifications to the transmit power or transmission format of $Tx_3$ using the signalled information on the busy burst, such as quality of service information or the interference tolerance of the $Tx_1$-$Rx_1$ link. The control information broadcast to $Tx_2$, however, causes it to refrain from transmitting during the first payload signal time slot, transmitting with reduced transmit power during the second payload signal time slot and use the third time slot for regular transmission in the example depicted in Fig. 12. This scenario would for example correspond to the case, where $Tx_1$ has a voice call ongoing with $Rx_1$, which has a high priority, while $Tx_2$ attempts to start a web browsing session. Now, the web browsing session is not allowed to disturb, interrupt or deteriorate the ongoing voice call.

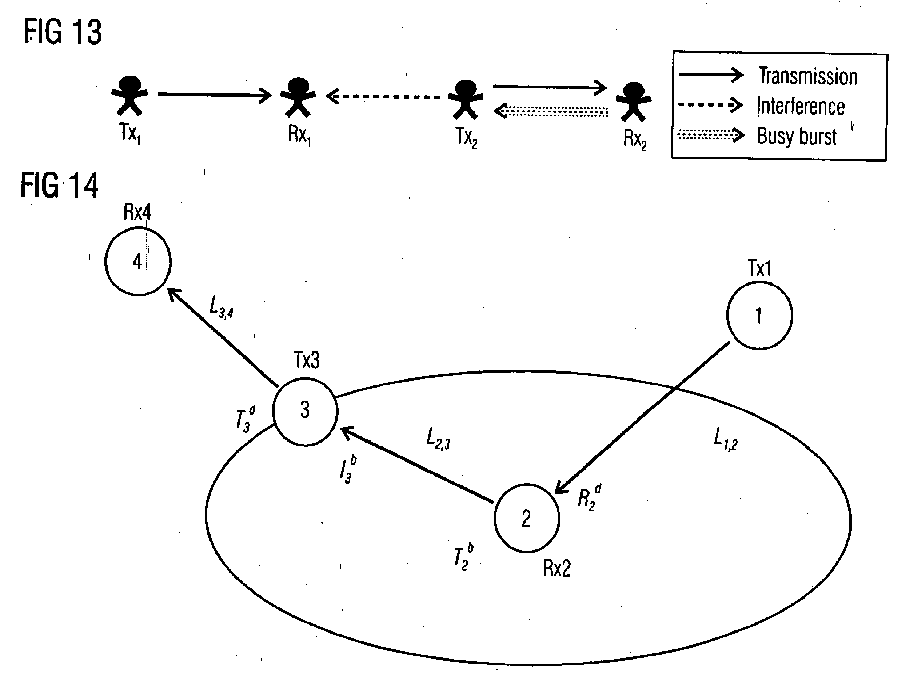

One embodiment of the present invention makes use of the busy burst to convey control information that allows for dynamic and efficient allocation of resources for control information of each active link. This is because a busy burst is only transmitted by a receiver following the reception of a data block and not when the receiver is idle. The control information transmitted from a receiver to its corresponding transmitter is implicitly protected from interference by the busy burst protocol. This is because of the TDD channel reciprocity. Fig. 13 shows a scenario that demonstrates the protective means of the busy burst. Fig. 13 shows two transmitter-receiver pairs, $Tx_1$-$Rx_1$ and $Tx_2$-$Rx_2$, where transmission of payload data as indicated by solid arrows, interference is indicated by dotted arrows, and the busy burst signal is indicated by the double dotted arrow. When $Tx_2$ is communicating with $Rx_2$, its interference disturbs the nearby receiver $Rx_1$. Therefore, $Rx_1$ is unable to detect a transmission from $Tx_1$, and so it does not broadcast a busy burst. Thus, $Tx_2$ receives with low interference the control information on the busy burst transmitted by its intended receiver $Rx_2$. As a consequence, possibly a lower rate channel coding, or a higher order modulation, or any higher order transmission format, respectively radio resources can be employed on the control link.

Another embodiment of the present invention allows decentralized self-organized link adaptation in a manner that the required signal-to-interference-and-noise-ratio at vulnerable receivers in the vicinity of a transmitter is taken into account when the transmitter changes its transmission format.

In order to enable this interference aware link adaptation, every receiver signals the level of interference it can tolerate, respectively, the received payload reception power by its intended transmitter either explicitly using busy burst piggy-backing, or implicitly by varying the busy burst transmit power. This enables link adaptation and quality of service support in multi-user, cellular, or ad-hoc networks, respectively in hybrids thereof. Any receiver in the network broadcasts the level of interference it can tolerate based on its required signal-to-interference-and-noise-ratio and on the received payload reception power from its intended transmitter. Potential other transmitters, which are sources of co-channel interference (CCI), as they receive the broadcast message; use the information received to adjust their transmit power, such that the absolute interference level at the vulnerable receiver is maintained. The process does not require central control. One important advantage of this embodiment of the present invention is that it does not require any additional signalling overhead other than the standard busy signal in principle. The only additional overall requirement is a network constant, which is assumed to be known at any entity in a network.

Another advantage is that the signalling is error-free, since it is the received busy burst power that determines the transmit power of a potential interferer and is adjusted dynamically by a vulnerable receiver as a function of its interference tolerance, respectively the reception power of a payload signal. This remains true even when multiple busy bursts are received simultaneously. Furthermore, the principle of this embodiment minimizes the busy tone transmit power. In order to explain this embodiment of the present invention in detail, two links are assumed, which are competing for resources, link (i, j) from $Tx_i$ to $Rx_j$ and link (m, n) from $Tx_m$ to $Rx_n$. The received busy signal power $I_i^b$ from receiver $Rx_n$ to transmitter $Tx_i$ can generally be determined as

$$I_i^b = \frac{T_n^b}{L_{n,i}}, \qquad (2)$$

where $T_n^b$ is the transmitted busy burst power of $Rx_n$ and $L_{n,i}$ is the pathloss between the data receiver $Rx_n$ and transmitter $Tx_i$. $Rx_n$ acts as a transmitter for the busy signal, while the data transmitter $Tx_i$ acts as a receiver for the busy signal. $I_i^b$ denotes interference, i.e., the part of the received busy signal, which is not from the own receiver $Rx_j$, but from interfering links. $R_i^b$ denotes the part of the received busy signal from the own link, i.e. from $Rx_j$. Let the data signal transmit power be a function of the received busy signal power,

$$T_i^d = f\left(I_i^b\right). \qquad (3)$$

The higher the received busy signal power, the lower the data signal power in order to avoid high interference at the vulnerable receiver. Therefore, one possible solution for $f(I_i^b)$ is,

$$T_i^d = \min\left\{\frac{c}{I_i^b}, T_{max}^d\right\}, \qquad (4)$$

where c is a constant. In order to avoid a singularity in case no interference is present, $I_i^b \rightarrow 0$, $T_i^d$ is upper bounded by a maximum transmit power $T_{max}^d$.

Equation 4 establishes a relation between the received busy signal power from the vulnerable receiver $Rx_n$ and the transmitted data power from $Tx_i$ addressing the adjustments of the busy signal transmit power $T_n^b$ of $Rx_n$, assuming that all transmitters in the network set their transmit power according to Equation 4, Equation 2 is substituted into Equation 4,

$$T_i^d = \min\left\{\frac{c L_{n,i}}{T_n^b}, T_{max}^d\right\}. \qquad (5)$$

Transmitter $Tx_i$ serving link (i,j) is also a potential source of interference for link (m,n). This is expressed by the interference $I_i^b$ received by receiver $Rx_n$,

$$I_n^d = \frac{T_i^d}{L_{i,n}} \cdot \qquad (6)$$

Substituting Equation 5 into Equation 6 results in,

$$I_n^d = \min\left\{\frac{cL_{n,i}}{T_n^b L_{i,n}}, T_{\max}^d\right\} \cdot \qquad (7)$$

Due to channel reciprocity in TDD,

$$L_{n,j} = L_{j,n} \cdot \qquad (8)$$

as a consequence,

$$I_n^d = \min\left\{\frac{c}{T_n^b}, T_{\max}^d\right\} \cdot \qquad (9)$$

This means, if any other transmitter $Tx_i$ sets its data transmit power according to Equation 4 inversely proportional to the received busy signal power, then the interference experienced by the data receiver $Rx_n$ is $I_n^d$. This mechanism allows every data receiver in the network to independently control the interference it can tolerate via the busy tone transmit power. A direct relationship between the interference power, $I_n^d$, and the used busy signal transmit power exists,

$$T_n^b = \frac{c}{I_n^d} \cdot \qquad (10)$$

The maximum tolerable interference depends on the received useful power, i.e. the payload reception power, and the required signal-to-interference-and-noise-ratio, which in turn is derived from some predefined quality of service constraints. An implicit power-based signalling mechanism as an embodiment of the present invention, which is independent of the actual pathloss as long as channel reciprocity is guaranteed, yields an interference and radio resource management instrument. In order to determine the constant c, which is valid and broadcast across the entire network, it is considered

$$c = I_{min} \cdot T^b_{max} , \qquad\qquad (11)$$

where $I_{min}$ is the receiver sensitivity and $T^b_{max}$ is the maximum possible busy signal transmit power.

$$I_{min} = k\,\vartheta\,B , \qquad\qquad (12)$$

where k is the Boltzmann constant in Joule per Kelvin, S is the ambient temperature in Kelvin, and B is the bandwidth in Hz.

Assuming that the data receiver Rx$_n$ requires a signal-to-interference-and-noise-ratio of $\gamma$, and the useful power received at this receiver is $R^d_n$, it follows that the maximum tolerable interference is,

$$I_{tol} = \frac{R^d_n}{\gamma} . \qquad\qquad (13)$$

This receiver adjusts its busy burst transmit power, $T^b_n$ as follows,

$$T^b_n = \min\left\{\frac{c}{I_{tol}}, T^b_{max}\right\} = \min\left\{\frac{c\gamma}{R^d_n}, T^b_{max}\right\} . \qquad\qquad (14)$$

where $T^b_{max}$ is the maximum busy signal power.

Summarizing the method in one embodiment of the present invention, the interference tolerance signalling is as follows:

1. Transmitter Tx$_m$ is connected with a receiver Rx$_n$ on link (m, n) using the transmit power $T^d_m$ ;

2. The data receiver Rx$_n$ sets its busy signal power according to Equation 14;

3. After measuring the busy signal interference $I^b_i$ from a vulnerable receiver Rx$_n$, transmitter Tx$_i$ adjusts its power according to Equation 4 in order to establish the link from Tx$_i$ to Rx$_j$, denoted as (i, j);

4. Provided a successful reception of the payload data, Rx$_j$ protects the link (i, j) by transmitting a busy signal with a transmit power according to Equation 14.

In one embodiment of the present invention, the transmit powers of the transmitters Tx$_m$ and Tx$_i$ stay constant for the time of the link to their corresponding receivers being established and are only set initially for their first access. In another embodiment of the present invention, the transmission powers of all transmitters are dynamically adjusted according to Equation 4, meaning that the transmit powers of the transmitters are readjusted if additional busy signal power from vulnerable receivers is received or interference conditions changed. According to Equation 14, the receivers adjust their busy signal transmit powers in dependence on the reception power of the payload data signals of their intended transmitters. In another embodiment of the present invention, the receivers adjust their busy signal transmission powers on the basis of their allowable interference level they can tolerate.

In order to avoid instability, the target signal-to-interference-and-noise-ratio $\gamma$ should be carefully chosen. The actually experienced interference at the receiver $I_n^d$ of Equation 9 may be utilized to make nodes more cautious. In case the actual interference in Equation 9-exceeds the tolerable interference of Equation 13, so that $I_n^d \gg I_{tol}$, it would be preferable to either disconnect or to lower its own signal-to-interference-and-noise-ratio requirements. The latter case can be achieved with another embodiment of the present invention, by combination of including information for link adaptation, piggy packed on the busy signal. In addition, a more cautious receiver could adjust its busy signal power by

$$T_n^b = \min\left\{\frac{c\gamma}{R_n^d}, \frac{c}{I_n^d}, T_{max}^b\right\} \, , \qquad\qquad (15)$$

which is the minimum of Equation 14 and Equation 10. By adjusting the busy signal power according to Equation 15 instead of Equation 14, nodes would compromise their own quality of service requirements in high interference scenarios, which might give other links the chance to maintain their transmission with reasonable performance.

The working mechanism is now demonstrated in detail using an example depicted in Fig. 14.

Fig. 14 shows an example scenario with two transmitters Tx1 and Tx3 and two receivers Rx2 and Rx4. The pathloss of the radio channel between transmitter Tx1 and receiver Rx2 is $L_{1,2}$. At the receiver Rx2, the payload signal transmitted by Tx1 is received with reception power $R_2^d$. In turn, the receiver Rx2 transmits a busy burst transmit power $T_2^b$. Between the receiver Rx2 and the transmitter Tx3 occurs a pathloss $L_{2,3}$. At the transmitter Tx3, the busy burst transmitted by the receiver Rx2 is received with reception power $I_3^b$. The transmitter Tx3 communicates with the receiver Rx4 through a radio channel $L_{3,4}$. The transmitter Tx3 transmits data towards Rx4 with a transmission power of $T_3^d$. In Fig. 14, the hearability region of the busy signal transmitted by Rx2 is indicated by the grey area. In order to explain the mechanism in detail, the parameters listed in Table 1 are assumed.

**TABLE 1**

| PARAMETERS OF THE EXAMPLE SCENARIO | | |
|---|---|---|
| Pathloss between Tx1 and Rx2 (intended link) [dB] | $L_{1,2}$ | 50 |
| Transmit power of Tx1 [dBm] | $T_1^d$ | 10 |
| Boltzmann constant [J/K] | k | $1.38066 \cdot 10^{-23}$ |
| Ambient temperature [K] | 9 | 293 |
| Bandwidth [MHz] | B | 100 |
| Maximum busy tone transmit power [dBm] | $T_{max}^b$ | 30 |

From the parameters in Table 1, the constant c can be derived according to Equation 11, c=-63.93dBm$^2$.

The pathloss $L_{3,2}$ between Tx3 and Rx2, which is the interfering link, is varied between 40dB - 120dB, i.e. a special case is covered where the pathloss of the intended link, $L_{1,2}$=50dB, is higher than the pathloss on the link between interfering transmitter Tx3 and a vulnerable receiver Rx2, $L_{3,2}$. Furthermore, the required signal-to-interference-and-noise-ratio $\gamma$ is varied from 4dB to 25dB in order to model different link capacity scenarios to be exploited by means of adaptive modulation.

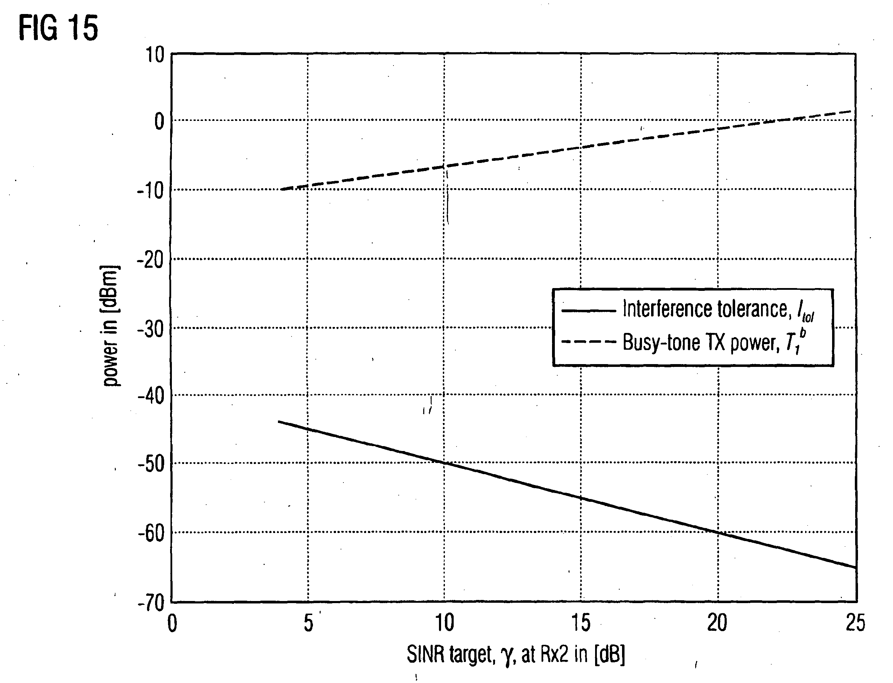

Fig. 15 shows a viewgraph, where power is shown on the abscissa and the signal-to-interference-and-noise-ratio (SINR) target $\gamma$ at Rx2 is shown on the ordinate. The interference tolerance is shown as a solid viewgraph, and the busy tone transmit power is shown as the dotted viewgraph. The maximum tolerable interference is plotted using Equation 13, where the useful power is 10dBm-50dB=-90dBm. The busy tone transmit power, $T_1^b$, is plotted using Equation 14. Clearly, both values are independent of the pathloss between Rx2 and Tx3 as shown in Fig. 14. As expected, the higher the required signal-to-interference-and-noise-ratio, the lower the tolerable interference at Rx2, and the higher the busy burst transmit power. Although the maximum allowed busy burst power is 30dBm, the maximum value ranges around only 0dBm.

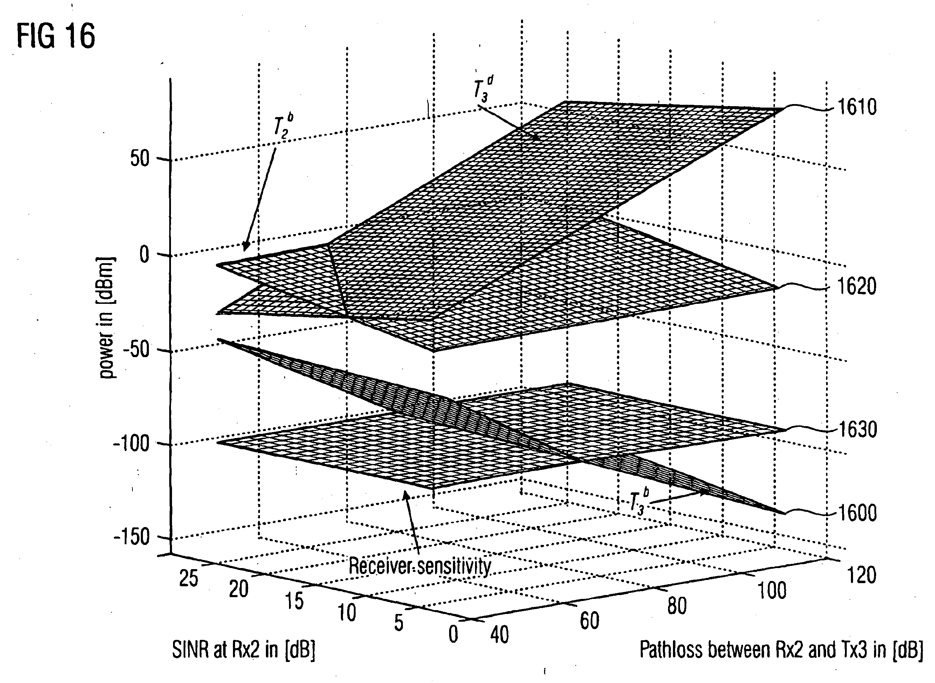

The viewgraph shown in Fig. 16 is three-dimensional. It shows power versus the signal-to-interference-and-noise-ratio $\gamma$ required at Rx2 and the pathloss between receiver Rx2 and transmitter Tx3. Moreover, Fig. 16 shows four planes, the first one is shown for the received busy tone power at Tx3 from Rx2, $I_3^b$ 1600 determined using Equation 2, the maximum possible data transmit power for Tx3 to maintain the signal-to-interference-and-noise-ratio target at Rx2, $T_3^d$ 1610 determined using Equation 4, the busy tone transmit power of Rx2, $T_2^b$ 1620 determined using Equation 14, and a receiver sensitivity level 1630 determined using Equation 12.

It can be seen in Fig. 16 that in almost all the cases, the data transmit power can be larger than the busy tone transmit power. Only for high signal-to-interference-and-noise-ratio targets $\gamma$ and a low pathloss between the receiver Rx2 and the transmitter Tx3, i.e. the case when the pathloss on the intended link is higher than the pathloss on the link between victim receiver Rx2 and neighbouring transmitter Tx3, the allowed data transmit power is lower than the busy burst transmit power, but still, the busy burst power is 30dB lower than the maximum. Furthermore, the busy burst power is 10dB less than the data transmit power on the desired link, which is 10dBm. The only significant implication is that for these particular cases, high signal-to-interference-and-noise-ratio target, low pathloss between transmitter Tx3 and receiver Rx2, the link between transmitter Tx3 and receiver Rx4 can only be served if it has a low pathloss, and/or low signal-to-interference-and-noise-ratio requirement and/or low interference at receiver Rx4. Without the need for a central controller, the respective transmitter will find out, whether one of these conditions holds due to the present invention.

In another embodiment of the present invention, the method of busy burst transmit power and payload data transmit power adjustment is combined with the busy tone explicit signalling of control information for rate adaptation on the intended link. Using the two embodiments together will provide a very powerful self-organizing, decentralized interference aware link adaptation mechanism. Also, the combination of including information for link adaptation for the intended link and information for other transmitters as, for example, a relative priority, and the power adjustment for busy tone and payload signal transmission power together provide a very effective means for decentralized radio resource management.

**Claims**

1. Transmitter apparatus (100) comprising:

   a busy signal receiver (110) for receiving a busy signal in a predefined busy signal time slot of a current frame, the signal in the busy signal time slot having information dependent on an interference power or a payload signal reception power related to a receiver, the busy signal receiver being adapted to extract the information dependent on the interference power or the payload signal reception power;
   a controller module (130) for adjusting a transmission power dependent on the information extracted from the signal in the busy signal time slot; and
   a transmitter module (120) for transmitting a payload signal with the adjusted transmit power in a payload signal time slot associated with the busy signal time slot in a subsequent frame.

2. Transmitter apparatus (100) of claim 1, wherein the busy signal has information on an allowable interference relative to a receiver and the busy signal receiver (110) being adapted for extracting the information on the allowable interference of the receiver.

3. Transmitter apparatus (100) of one of the claims 1 or 2, wherein the busy signal includes information explicitly by means of at least one of or a combination of the group of a code bit, a code word, a code or modulation symbol.

4. Transmitter apparatus (100) of one of the claims 1 to 3, wherein the busy signal includes information implicitly by means of at least one of, a combination of or ratios of the group of a reception power, signal to interference plus noise ratio (SINR), a channel state information, a frequency or a frequency offset, a phase shift, a timing or a timing offset.

5. Transmitter apparatus (100) of one of the claims 1 to 4, wherein the transmitter apparatus is in a contention mode, the contention mode being a state of payload data for transmission being available and no payload data having been transmitted in the preceding frame, the busy signal receiver attempting to receive a busy signal in a predefined busy signal time slot associated with the payload signal time slot, the transmitter apparatus being adapted for starting transmission only in a payload signal time slot for which the associated busy signal indicated permission.

6.  Transmitter apparatus (100) of claim 5, wherein the controller module (130) is adapted for adjusting the transmission power only in contention mode.

7.  Transmitter apparatus (100) of one of the claims 1 to 4, wherein the transmitter apparatus is in a reservation mode, the reservation mode being a state of payload data being available for transmission and transmission of payload data having taken place in a payload signal time slot of a preceding frame, upon which a busy signal having been received in the associated busy signal time slot, the transmitter apparatus being adapted to continue transmission with a new payload data during the same payload signal time slot of the current frame.

8.  Transmitter apparatus (100) of claim 7, wherein the controller module (130) is adapted for adjusting the transmit power on the basis of an information included in the busy signal.

9.  Transmitter apparatus (100) of claim 7 wherein the controller module is adapted for adjusting the transmit power on the basis of a preconfigured scheme.

10. Transmitter apparatus (100) of one of the claims 1 to 9, wherein the transmitter apparatus is adapted for adjusting the transmit power dependent on the reception power of the busy signal.

11. Transmitter apparatus (100) of one of the claims 1 to 10, wherein the transmitter apparatus is adapted for adjusting the transmission power according to

$$T_i^d = \min\left\{ \frac{c}{I_i^b}, T_{max}^d \right\}$$

where $T_i^d$ is the data signal transmit power, c is a constant, $I_i^b$ is the reception power of a busy signal of a receiver or of a superposition of busy signals from a plurality of receivers, which the transmitter apparatus does not intent to transmit to, $T_{max}^d$ is the maximum transmit power.

12. Transmitter apparatus (100) of one of the claims 1 to 11, wherein the busy signal includes information being dependent on a reception quality of a transmitter of the busy signal, the transmitter module (120) having an adjustable transmit characteristic for transmitting the payload signal in the payload signal time slot, and the controller module (130) being adjusted for adjusting the adjustable transmit characteristic on the basis of the quality information.

13. Transmitter apparatus (100) of one of the claims 1 to 12, wherein the busy signal receiver is adapted for receiving a busy signal from a first receiver in a busy signal time slot associated with the payload signal time slot in a current frame, the busy signal having additional information useful for a transmitter transmitting a payload signal in the payload signal time slot or a different transmitter not using the payload signal time slot, further comprising:

   a busy signal information extractor (340) for extracting the additional information useful for a different transmitter;
   an information interpreter (330) for interpreting the extracted information, and
   a transmission decider (320) for deciding to perform a transmission of a scheduled payload information to a second receiver, when the information interpreter generates a transmission allowed indication, and a transmitter module for performing a transmission of the scheduled payload information in a payload signal time slot of a later frame, when a transmission decision exists.

14. Method for transmitting, comprising the following steps:

   receiving a busy signal in a predefined busy signal time slot of a current frame, the signal in the busy signal time slot having information on an interference power or a payload signal reception power related to a receiver, the busy signal receiver being adapted to extract the information on the interference power or the payload signal reception power,
controlling a transmit power depending on the information extracted from the signal in the busy signal time slot,
transmitting a payload signal with the adjustable transmit power in a payload signal time slot associated with
the busy signal time slot in a subsequent frame.

15. Computer program having program code for performing a method of claim 14, when the program code runs on a
computer.

16. Receiver apparatus (400), comprising:

a receiver module (410) for receiving a payload signal in a payload signal time slot;
a quality estimator (420) for estimating a reception quality of the received payload signal;
a controller module (430) for determining information on an allowable interference power; and
a busy signal transmitter (440) for transmitting a busy signal in a busy signal time slot associated with - the
payload signal time slot, when the reception quality is above a quality threshold, the busy signal transmitter
being adapted to include information depending on an interference power or a payload signal reception power
in the payload signal time slot in the busy signal.

17. Receiver apparatus (400) of claim 16, wherein the busy signal transmitter (440) is adapted for adjusting the busy
signal transmit power depending on an allowable interference power.

18. Receiver apparatus (400) of claim 16 or 17, wherein the busy signal transmitter (440) is adapted to increase the
busy signal transmission power when the quality estimator (420) indicates the reception quality of the payload signal
is below a reception quality threshold.

19. Receiver apparatus (400) of one of the claims 16 to 18, wherein the busy signal transmitter (440) is adapted for
including information explicitly by means of at least one of or a combination of the group of a code bit, a code word,
a code or modulation symbol.

20. Receiver apparatus (400) of one of the claims 16 to 19, wherein the busy signal transmitter (440) is adapted for
including information implicitly by means of at least one of, a combination of or ratios of the group of a reception
power, signal to interference plus noise ratio (SINR), a channel state information, a frequency or a frequency offset,
a phase shift, a timing or a timing offset.

21. Receiver apparatus (400) of one of the claims 16 to 20, wherein the busy signal transmitter is adapted for adjusting
the busy signal transmit power depending on the reception power, according to

$$T_n^b = \min\left\{\frac{c}{I_{tol}}, T_{max}^b\right\} = \min\left\{\frac{c\gamma}{R_n^d}, T_{max}^b\right\}.$$

The $T_n^b$ is the busy signal transmit power, c is a constant, $\gamma$ is a signal-to-interference-and-noise-ratio required at the receiver apparatus (400) for satisfactory reception of the payload signal, and $R_n^d$ is the reception power of the payload signal.

22. Receiver apparatus (400) of claim 21, wherein the busy signal transmit power is upper-limited by a maximum busy
signal transmit power.

23. Receiver apparatus (400) of claim 21, wherein the busy signal transmit power is upper-limited by the term $c/I_n^d$,

where c is a constant and $I_n^d$ is the received interference power at the receiver apparatus during the payload signal time slot.

24. Receiver apparatus (400) of one of the claims 16 to 21, wherein the receiver apparatus (400) is adapted for updating the information included in the busy signal during every frame.

25. Receiver apparatus (400) of one of the claims 16 to 21, wherein the receiver apparatus is adapted for updating the information included in the busy signal only at the beginning of a transmission or based on a preconfigured scheme.

26. Receiver apparatus (400) of claims 16 to 25, wherein the busy signal transmitter is adapted for generating the busy signal such that it includes information on the reception quality of the payload signal, on a status of a transmitter of the payload signal, or an instruction to a transmitter of the payload signal of the associated payload signal time slot or a different payload signal time slot.

27. Receiver apparatus (400) of claims 16 to 26, wherein the busy signal transmitter is adapted for generating the busy signal such that the busy signal includes information being dependent on the reception quality.

28. Method for receiving, comprising the following steps:

   receiving a payload signal in a predefined payload signal time slot;
   estimating the reception quality of the received payload signal;
   determining information on an allowable interference power; and
   transmitting a busy signal in a busy signal time slot associated with the payload signal time slot, when the reception quality is above a quality threshold, the busy signal being generated such that it includes information about an interference power or a payload signal reception power in a payload signal time slot.

29. Method for receiving of claim 28, wherein the busy signal transmit power is adjusted depending on the received allowable interference power.

30. Computer program having program codes for performing a method of claim 28 or 29, when the program code runs on a computer.

**Patentansprüche**

1. Sendervorrichtung (100), die folgende Merkmale aufweist:

   einen Besetztsignal-Empfänger (110) zum Empfangen eines Besetztsignals in einem vordefinierten Besetztsignal-Zeitschlitz eines gegenwärtigen Rahmens, wobei das Signal in dem Besetztsignal-Zeitschlitz Informationen aufweist, die von einer Interferenzleistung oder einer Nutzsignal-Empfangsleistung in Bezug auf einen Empfänger abhängen, wobei der Besetztsignal-Empfänger angepasst ist, um die Informationen, die von der Interferenzleistung oder der Nutzsignal-Empfangsleistung abhängen, zu extrahieren;
   ein Steuerungsmodul (130) zum Einstellen einer Sendeleistung in Abhängigkeit von den Informationen, die aus dem Signal in dem Besetztsignal-Zeitschlitz extrahiert werden; und
   ein Sendermodul (120) zum Senden eines Nutzsignals mit der eingestellten Sendeleistung in einem Nutzsignal-Zeitschlitz, der dem Besetztsignal-Zeitschlitz in einem nachfolgenden Rahmen zugeordnet ist.

2. Sendervorrichtung (100) gemäß Anspruch 1, bei der das Besetztsignal Informationen über eine erlaubte Interferenz in Bezug auf einen Empfänger aufweist und der Besetztsignal-Empfänger (110) zum Extrahieren der Informationen über die erlaubte Interferenz des Empfängers angepasst ist.

3. Sendervorrichtung (100) gemäß einem der Ansprüche 1 oder 2, bei der das Besetztsignal explizit mittels zumindest eines Elements von oder einer Kombination der Gruppe eines Codebits, eines Codeworts, eines Codes oder Modulationssymbols Informationen umfasst.

4. Sendervorrichtung (100) gemäß einem der Ansprüche 1 bis 3, bei der das Besetztsignal implizit mittels zumindest eines Elements von, einer Kombination von oder Verhältnissen der Gruppe einer Empfangsleistung, eines Signal-zu-Interferenz-plus-Rausch-Verhältnisses (SINR), einer Kanalzustandsinformation, einer Frequenz oder eines Frequenzversatzes, einer Phasenverschiebung, einer Zeitgebung oder eines Zeitgebungsversatzes Informationen umfasst.

**5.** Sendervorrichtung (100) gemäß einem der Ansprüche 1 bis 4, wobei die Sendervorrichtung in einem Konkurrenzbetrieb ist, wobei der Konkurrenzbetrieb ein Zustand ist, in dem Nutzdaten zum Senden verfügbar sind und in dem vorherigen Rahmen keine Nutzdaten gesendet wurden, wobei der Besetztsignal-Empfänger versucht, ein Besetztsignal in einem vordefinierten Besetztsignal-Zeitschlitz zu empfangen, der dem Nutzsignal-Zeitschlitz zugeordnet ist, wobei die Sendervorrichtung zum Starten eines Sendens nur in einem Nutzsignal-Zeitschlitz, für den das zugeordnete Besetztsignal eine Erlaubnis angezeigt hat, angepasst ist.

**6.** Sendervorrichtung (100) gemäß Anspruch 5, bei der das Steuerungsmodul (130) zum Einstellen der Sendeleistung nur im Konkurrenzbetrieb angepasst ist.

**7.** Sendervorrichtung (100) gemäß einem der Ansprüche 1 bis 4, wobei die Sendervorrichtung in einem Reservierungsbetrieb ist, wobei der Reservierungsbetrieb ein Zustand ist, in dem Nutzdaten zum Senden verfügbar sind und ein Senden von Nutzdaten in einem Nutzsignal-Zeitschlitz eines vorherigen Rahmens stattgefunden hat, woraufhin ein Besetztsignal in dem zugeordneten Besetztsignal-Zeitschlitz empfangen wurde, wobei die Sendervorrichtung angepasst ist, um mit einem Senden mit neuen Nutzdaten während des gleichen Nutzsignal-Zeitschlitzes des gegenwärtigen Rahmens fortzufahren.

**8.** Sendervorrichtung (100) gemäß Anspruch 7, bei der das Steuerungsmodul (130) zum Einstellen der Sendeleistung auf der Basis einer Information, die in dem Besetztsignal beinhaltet ist, angepasst ist.

**9.** Sendervorrichtung (100) gemäß Anspruch 7, bei der das Steuerungsmodul zum Einstellen der Sendeleistung auf der Basis eines vorkonfigurierten Schemas angepasst ist.

**10.** Sendervorrichtung (100) gemäß einem der Ansprüche 1 bis 9, wobei die Sendervorrichtung zum Einstellen der Sendeleistung in Abhängigkeit von der Empfangsleistung des Besetztsignals angepasst ist.

**11.** Sendervorrichtung (100) gemäß einem der Ansprüche 1 bis 10, wobei die Sendervorrichtung zum Einstellen der Sendeleistung gemäß folgender Gleichung angepasst ist:

$$T_i^d = \min\left\{\frac{c}{I_i^b}, T_{\max}^d\right\}$$

wobei $T_i^d$ die Datensignalsendeleistung ist, c eine Konstante ist, $I_i^b$ die Empfangsleistung eines Besetztsignals eines Empfängers oder einer Überlagerung von Besetztsignal von einer Mehrzahl von Empfängern ist, an die die Sendervorrichtung nicht zu senden beabsichtigt, wobei $T_{\max}^d$ die maximale Sendeleistung ist.

**12.** Sendervorrichtung (100) gemäß einem der Ansprüche 1 bis 11, bei der das Besetztsignal Informationen umfasst, die von einer Empfangsqualität eines Senders des Besetztsignals abhängen, wobei das Sendermodul (120) eine einstellbare Sendecharakteristik zum Senden des Nutzsignals in einem Nutzsignal-Zeitschlitz aufweist, und wobei das Steuerungsmodul (130) zum Einstellen der einstellbaren Sendecharakteristik auf der Basis der Qualitätsinformationen eingestellt ist.

**13.** Sendervorrichtung (100) gemäß einem der Ansprüche 1 bis 12, bei der der Besetztsignal-Empfänger zum Empfangen eines Besetztsignals von einem ersten Empfänger in einem Besetztsignal-Zeitschlitz, der dem Nutzsignal-Zeitschlitz in einem gegenwärtigen Rahmen zugeordnet ist, angepasst ist, wobei das Besetztsignal zusätzliche Informationen aufweist, die für einen Sender, der ein Nutzsignal in dem Nutzsignal-Zeitschlitz sendet, oder einen unterschiedlichen Sender, der den Nutzsignal-Zeitschlitz nicht verwendet, nützlich sind, die ferner folgende Merkmale aufweist:

einen Nutzsignal-Informationen-Extrahierer (340) zum Extrahieren der zusätzlichen Informationen, die für einen unterschiedlichen Sender nützlich sind;
einen Informationsinterpretierer (330) zum Interpretieren der extrahierten Informationen, und
einen Sendeentscheider (320) zum Entscheiden über die Durchführung eines Sendens einer geplanten Nutzinformation an einen zweiten Empfänger, wenn der Informationsinterpretierer eine Senden-Erlaubt-Anzeige erzeugt, und ein Sendermodul zum Durchführen eines Sendens der geplanten Nutzinformation in einem Nutzsignal-Zeitschlitz eines späteren Rahmens, wenn eine Sendeentscheidung vorliegt.

**14.** Verfahren zum Senden, das folgende Schritte aufweist:

Empfangen eines Besetztsignals in einem vordefinierten Besetztsignal-Zeitschlitz eines gegenwärtigen Rahmens, wobei das Signal in dem Besetztsignal-Zeitschlitz Informationen über eine Interferenzleistung oder eine Nutzsignal-Empfangsleistung in Bezug auf einen Empfänger aufweist, wobei der Besetztsignal-Empfänger angepasst ist, um die Informationen über die Interferenzleistung oder die Nutzsignal-Empfangsleistung zu extrahieren;
Steuern einer Sendeleistung in Abhängigkeit von den Informationen, die aus dem Signal in dem Besetztsignal-Signalschlitz extrahiert werden, Senden eines Nutzsignals mit der einstellbaren Sendeleistung in einem Nutzsignal-Zeitschlitz, der dem Besetztsignal-Zeitschlitz in einem nachfolgenden Rahmen zugeordnet ist.

**15.** Computerprogramm mit einem Programmcode zum Durchführen eines Verfahrens gemäß Anspruch 14, wenn der Programmcode auf einem Computer läuft.

**16.** Empfängervorrichtung (400), die folgende Merkmale aufweist:

ein Empfängermodul (410) zum Empfangen eines Nutzsignals in einem Nutzsignal-Zeitschlitz;
einen Qualitätseinschätzer (420) zum Einschätzen einer Empfangsqualität des empfangenen Nutzsignals;
ein Steuerungsmodul (430) zum Bestimmen von Informationen über eine erlaubte Interferenzleistung; und
einen Besetztsignal-Sender (440) zum Senden eines Besetztsignals in einem Besetztsignal-Zeitschlitz, der dem Nutzsignal-Zeitschlitz zugeordnet ist, wenn die Empfangsqualität über einer Qualitätsschwelle liegt, wobei der Besetztsignal-Sender angepasst ist, um Informationen zu umfassen, die von einer Interferenzleistung oder einer Nutzsignal-Empfangsleistung in dem Nutzsignal-Zeitschlitz in dem Besetztsignal abhängen.

**17.** Empfängervorrichtung (400) gemäß Anspruch 16, bei der der Besetztsignal-Sender (440) zum Einstellen der Besetztsignal-Sendeleistung in Abhängigkeit von einer erlaubten Interferenzleistung angepasst ist.

**18.** Empfängervorrichtung (400) gemäß Anspruch 16 oder 17, bei der der Besetztsignal-Sender (440) angepasst ist, um die Besetztsignal-Sendeleistung zu erhöhen, wenn der Qualitätseinschätzer (420) anzeigt, dass die Empfangsqualität des Nutzsignals unter einer Empfangsqualitätsschwelle liegt.

**19.** Empfängervorrichtung (400) gemäß einem der Ansprüche 16 bis 18, bei der der Besetztsignal-Sender (440) zum expliziten Beinhalten von Informationen mittels zumindest eines Elements von oder einer Kombination der Gruppe eines Codebits, eines Codeworts, eines Codes oder Modulationssymbols angepasst ist.

**20.** Empfängervorrichtung (400) gemäß einem der Ansprüche 16 bis 19, bei der der Besetztsignal-Sender (440) zum impliziten Beinhalten von Informationen mittels zumindest eines Elements von, einer Kombination von oder Verhältnissen der Gruppe einer Empfangsleistung, eines Signal-zu-Interferenz-plus-Rausch-Verhältnisses (SINR), einer Kanalzustandsinformation, einer Frequenz oder eines Frequenzversatzes, einer Phasenverschiebung, einer Zeitgebung oder eines Zeitgebungsversatzes angepasst ist,.

**21.** Empfängervorrichtung (400) gemäß einem der Ansprüche 16 bis 20, bei der der Besetztsignal-Sender zum Einstellen der Besetztsignal-Sendeleistung in Abhängigkeit von der Empfangsleistung gemäß folgender Gleichung angepasst ist:

$$T_n^b = \min\left\{\frac{c}{I_{tol}}, T_{\max}^b\right\} = \min\left\{\frac{c\gamma}{R_n^d}, T_{\max}^b\right\}.$$

wobei $T_n^b$ die Besetztsignal-Sendeleistung ist, c eine Konstante ist, $\gamma$ ein Signal-zu-Interferenz-und-RauschVerhältnis ist, das an der Empfängervorrichtung (400) für einen zufrieden stellenden Empfang des Nutzsignals erforderlich ist, und $R_n^d$ die Empfangsleistung des Nutzsignals ist.

**22.** Empfängervorrichtung (400) gemäß Anspruch 21, bei der die Besetztsignal-Sendeleistung durch eine maximale Besetztsignal-Sendeleistung nach oben begrenzt ist.

**23.** Empfängervorrichtung (400) gemäß Anspruch 21, bei der die Besetztsignal-Sendeleistung durch den Term $c / I_n^d$ nach oben begrenzt ist, wobei c eine Konstante ist und $I_n^d$ die empfangene Interferenzleistung an der Empfängervorrichtung während des Nutzsignal-Zeitschlitzes ist.

**24.** Empfängervorrichtung (400) gemäß einem der Ansprüche 16 bis 21, wobei die Empfängervorrichtung (400) zum Aktualisieren der Informationen, die in dem Besetztsignal beinhaltet sind, während jedes Rahmens angepasst ist.

**25.** Empfängervorrichtung (400) gemäß einem der Ansprüche 16 bis 21, wobei die Empfängervorrichtung zum Aktualisieren der Informationen, die in dem Besetztsignal beinhaltet sind, nur zu Beginn eines Sendens oder basierend auf einem vorkonfigurierten Schema angepasst ist.

**26.** Empfängervorrichtung (400) gemäß einem der Ansprüche 16 bis 25, bei der der Besetztsignal-Sender zum derartigen Erzeugen des Besetztsignals angepasst ist, dass dieses Informationen über die Empfangsqualität des Nutzsignals, über einen Status eines Senders des Nutzsignals oder eine Instruktion an einen Sender des Nutzsignals des zugeordneten Nutzsignal-Zeitschlitzes oder eines unterschiedlichen Nutzsignal-Zeitschlitzes umfasst.

**27.** Empfängervorrichtung (400) gemäß einem der Ansprüche 16 bis 26, bei der der Besetztsignal-Sender zum derartigen Erzeugen des Besetztsignals angepasst ist, dass das Besetztsignal Informationen umfasst, die von der Empfangsqualität abhängen.

**28.** Verfahren zum Empfangen, das die folgenden Schritte aufweist:

Empfangen eines Nutzsignals in einem vordefinierten Nutzsignal-Zeitschlitz;
Einschätzen der Empfangsqualität des empfangenen Nutzsignals;
Bestimmen von Informationen über eine erlaubte Interferenzleistung; und
Senden eines Besetztsignals in einem Besetztsignal-Zeitschlitz, der dem Nutzsignal-Zeitschlitz zugeordnet ist, wenn die Empfangsqualität über einer Qualitätsschwelle ist, wobei das Besetztsignal derart erzeugt wird, dass es Informationen über eine Interferenzleistung oder eine Nutzsignalempfangsleistung in einem Nutzsignal-Zeitschlitz umfasst.

**29.** Verfahren zum Empfangen gemäß Anspruch 28, bei dem die Besetztsignal-Sendeleistung in Abhängigkeit von der empfangenen erlaubten Interferenzleistung eingestellt wird.

**30.** Computerprogramm mit Programmcodes zum Durchführen eines Verfahrens gemäß Anspruch 28 oder 29, wenn der Programmcode auf einem Computer läuft.

**Revendications**

**1.** Appareil émetteur (100), comprenant:

un récepteur de signal occupé (110) destiné à recevoir un signal occupé dans une fenêtre de temps de signal occupé prédéfinie d'une trame actuelle, le signal dans la fenêtre de temps de signal occupé présentant des informations dépendant d'une puissance d'interférence ou d'une puissance de réception de signal de charge utile relative à un récepteur, le récepteur de signal occupé étant adapté pour extraire les informations dépendant de la puissance d'interférence ou de la puissance de réception de signal de charge utile;
un module contrôleur (130) destiné à ajuster une puissance de transmission dépendant des informations extraites du signal dans la fenêtre de temps de signal occupé; et
un module émetteur (120) destiné à transmettre un signal de charge utile à la puissance de transmission ajustée dans une fenêtre de temps de signal de charge utile associée à la fenêtre de temps de signal occupé dans une trame suivante.

**2.** Appareil émetteur (100) selon la revendication 1, dans lequel le signal occupé présente des informations sur une interférence admissible relative à un récepteur et le récepteur de signal occupé (110) est adapté de manière à extraire les informations sur l'interférence admissible du récepteur.

**3.** Appareil émetteur (100) selon l'une des revendications 1 ou 2, dans lequel le signal occupé comporte des informations explicitement au moins de l'un parmi ou d'une combinaison du groupe composé d'un bit de code, d'un mot de code, d'un symbole de code ou de modulation.

**4.** Appareil émetteur (100) selon l'une des revendications 1 à 3, dans lequel le signal occupé comporte des informations implicitement au moyen d'au moins l'un parmi, une combinaison de ou des rapports du groupe composé d'une puissance de réception, signal à interférence plus rapport de bruit (SINR), une information d'état de canal, une fréquence ou un décalage de fréquence, un déphasage, une synchronisation ou un décalage de synchronisation.

**5.** Appareil émetteur (100) selon l'une des revendications 1 à 4, dans lequel l'appareil émetteur est en mode contention, le mode contention étant un état de données de charge utile disponibles pour transmission et pas de données de charge utile transmises dans la trame précédente, le récepteur de signal occupé essayant de recevoir un signal occupé dans une fenêtre de temps de signal occupé prédéfinie associée à la fenêtre de temps de signal de charge utile, l'appareil émetteur étant adapté de manière à ne commencer la transmission que dans une fenêtre de temps de signal de charge utile pour laquelle le signal occupé associé indiquait l'autorisation.

**6.** Appareil émetteur (100) selon la revendication 5, dans lequel le module contrôleur (130) est adapté de manière à n'ajuster la puissance de transmission qu'en mode contention.

**7.** Appareil émetteur (100) selon l'une des revendications 1 à 4, dans lequel l'appareil émetteur est en mode réservation, le mode réservation étant un état de données de charge utile disponibles pour transmission et une transmission de données de charge utile ayant eu lieu dans une fenêtre de temps de signal de charge utile d'une trame précédente, après quoi un signal occupé a été reçu dans la fenêtre de temps de signal occupé associée, l'appareil émetteur étant adapté de manière à continuer la transmission avec de nouvelles données de charge utile pendant la même fenêtre de temps de signal de charge utile de la trame actuelle.

**8.** Appareil émetteur (100) selon la revendication 7, dans lequel le module contrôleur (130) est adapté de manière à ajuster la puissance de transmission sur base d'une information incluse dans le signal occupé.

**9.** Appareil émetteur (100) selon la revendication 7, dans lequel le module contrôleur est adapté de manière à ajuster la puissance de transmission sur base d'un schéma préconfiguré.

**10.** Appareil émetteur (100) selon l'une des revendications 1 à 9, dans lequel l'appareil émetteur est adapté de manière à ajuster la puissance de transmission en fonction de la puissance de réception du signal occupé.

**11.** Appareil émetteur (100) selon l'une des revendications 1 à 10, dans lequel l'appareil émetteur est adapté de manière à ajuster la puissance de transmission selon

$$T_i^d = \min\left\{\frac{c}{I_i^b}, T_{\max}^d\right\}$$

où $T_i^d$ est la puissance de transmission de signal de données, c est une constante, $I_i^d$ est la puissance de réception d'un signal occupé d'un récepteur ou d'une superposition de signaux occupés d'une pluralité de récepteurs que l'appareil émetteur n'a pas l'intention de transmettre, $T_{\max}^d$ est la puissance de transmission maximale.

**12.** Appareil émetteur (100) selon l'une des revendications 1 à 11, dans lequel le signal occupé comporte des informations dépendant d'une qualité de réception d'un émetteur du signal occupé, le module émetteur (120) ayant une caractéristique de transmission réglable pour transmettre le signal de charge utile dans la fenêtre de temps de signal de charge utile, et le module contrôleur (130) étant ajusté de manière à ajuster la caractéristique de transmission réglable sur base de l'information de qualité.

13. Appareil émetteur (100) selon l'une des revendications 1 à 12, dans lequel le récepteur de signal occupé est adapté de manière à recevoir un signal occupé d'un premier récepteur dans une fenêtre de temps de signal occupé associée à la fenêtre de temps de signal de charge utile dans une trame actuelle, le signal occupé présentant des informations additionnelles utiles pour un émetteur transmettant un signal de charge utile dans la fenêtre de temps de signal de charge utile ou un émetteur différent n'utilisant pas la fenêtre de temps de signal de charge utile;
un extracteur d'informations de signal occupé (340) destiné à extraire des informations additionnelles utiles pour un émetteur différent;
un interprète d'informations (330) destiné à interpréter les informations extraites; et
un décideur de transmission (320) destiné à décider d'effectuer une transmission d'une information de charge utile programmée à un deuxième récepteur, lorsque l'interprète d'informations génère une indication de transmission autorisée, et un module émetteur destiné à effectuer une transmission d'informations de charge utile programmées dans une fenêtre de temps de signal de charge utile d'une trame ultérieure, lorsqu'il existe une décision de transmission.

14. Procédé pour transmettre, comprenant les étapes suivantes consistant à:

   recevoir un signal occupé dans une fenêtre de temps de signal occupé prédéfinie d'une trame actuelle, le signal dans la fenêtre de temps de signal occupé présentant des informations sur une puissance d'interférence ou une puissance de réception de signal de charge utile relative à un récepteur, le récepteur de signal occupé étant adapté de manière à extraire les informations sur la puissance d'interférence ou la puissance de réception de signal de charge utile,
   régler une puissance de transmission en fonction des informations extraites du signal dans la fenêtre de temps de signal occupé, transmettre un signal de charge utile avec la puissance de transmission réglable dans une fenêtre de temps de signal de charge utile associée à la fenêtre de temps de signal occupé dans une trame suivante.

15. Programme d'ordinateur présentant un code de programme pour réaliser un procédé selon la revendication 14 lorsque le code de programme est exécuté sur un ordinateur.

16. Appareil récepteur (400), comprenant:

   un module récepteur (410) destiné à recevoir un signal de charge utile dans une fenêtre de temps de signal de charge utile;
   un estimateur de qualité (420) destiné à estimer une qualité de réception du signal de charge utile reçu;
   un module contrôleur (430) destiné à déterminer les informations sur une puissance d'interférence admissible; et
   un émetteur de signal occupé (440) destiné à transmettre un signal occupé dans une fenêtre de temps de signal occupé associée à la fenêtre de temps de signal de charge utile lorsque la qualité de réception est au-dessus d'un seuil de qualité, l'émetteur de signal occupé étant adapté de manière à inclure des informations dépendant d'une puissance d'interférence ou d'une puissance de réception de signal de charge utile dans la fenêtre de temps de signal de charge utile dans le signal occupé.

17. Appareil récepteur (400) selon la revendication 16, dans lequel l'émetteur de signal occupé (440) est adapté de manière à ajuster la puissance de transmission de signal occupé en fonction d'une puissance d'interférence admissible.

18. Appareil récepteur (400) selon la revendication 16 ou 17, dans lequel l'émetteur de signal occupé (440) est adapté de manière à augmenter la puissance de transmission de signal occupé lorsque l'estimateur de qualité (420) indique que la qualité de réception du signal de charge utile est au-dessous d'un seuil de qualité de réception.

19. Appareil récepteur (400) selon l'une des revendications 16 à 18, dans lequel l'émetteur de signal occupé (440) est adapté de manière à inclure des informations explicitement au moyen d'au moins l'un parmi ou une combinaison du groupe composé d'un bit de code, d'un mot de code, d'un symbole de code ou de modulation.

**20.** Appareil récepteur (400) selon l'une des revendications 16 à 19, dans lequel l'émetteur de signal occupé (440) est adapté de manière à inclure des informations implicitement au moyen d'au moins l'un parmi, une combinaison du ou des rapports du groupe composé d'une puissance du réception, d'un signal à interférence plus rapport de bruit (SINR), une information d'état de canal, une fréquence ou un décalage de fréquence, un déphasage, une synchronisation ou un décalage de synchronisation.

**21.** Appareil récepteur (400) selon l'une des revendications 16 à 20, dans lequel l'émetteur de signal occupé est adapté de manière à ajuster la puissance de transmission de signal occupé en fonction de la puissance de réception, selon

$$T_n^b = \min\left\{\frac{c}{I_{tol}}, T_{\max}^b\right\} = \min\left\{\frac{c\gamma}{R_n^d}, T_{\max}^b\right\},$$

où $T_n^b$ est la puissance de transmission de signal occupé, c est une constante, $\gamma$ est un rapport de signal à interférence et bruit requis à l'appareil récepteur (400) pour une réception satisfaisante du signal de charge utile, et $R_n^d$ est la puissance de réception du signal de charge utile.

**22.** Appareil récepteur (400) selon la revendication 21, dans lequel la puissance de transmission de signal occupé est limitée dans le haut par une puissance de transmission de signal occupé maximale.

**23.** Appareil récepteur (400) selon la revendication 21, dans lequel la puissance de transmission de signal occupé est limitée dans le haut par le terme $c / I_n^d$, où c est une constante et $I_n^d$ est la puissance d'interférence reçue à l'appareil récepteur pendant la fenêtre de temps de signal de charge utile.

**24.** Appareil récepteur (400) selon l'une des revendications 16 à 21, dans lequel l'appareil récepteur (400) est adapté de manière à mettre à jour les informations incluses dans le signal occupé pendant chaque trame.

**25.** Appareil récepteur (400) selon l'une des revendications 16 à 21, dans lequel l'appareil récepteur est adapté de manière à mettre à jour les informations incluses dans le signal occupé uniquement au début d'une transmission ou sur base d'un schéma préconfiguré.

**26.** Appareil récepteur (400) selon les revendications 16 à 25, dans lequel l'émetteur de signal occupé est adapté de manière à générer le signal occupé de sorte qu'il comporte des informations sur la qualité de réception du signal de charge utile, sur un état d'un émetteur du signal de charge utile, ou une instruction à un émetteur du signal de charge utile de la fenêtre de temps de signal de charge utile associée ou d'une fenêtre de temps de signal de charge utile différente.

**27.** Appareil récepteur (400) selon les revendications 16 à 26, dans lequel l'émetteur de signal occupé est adapté de manière à générer le signal occupé de sorte que le signal occupé comporte des informations dépendant de la qualité de réception.

**28.** Procédé pour recevoir, comprenant les étapes suivantes consistant à:

recevoir un signal de charge utile dans une fenêtre de temps de signal de charge utile prédéfinie;
estimer la qualité de réception du signal de charge utile reçu;
déterminer les informations sur une puissance d'interférence admissible; et
transmettre un signal occupé dans une fenêtre de temps de signal occupé associée à la fenêtre de temps de signal de charge utile lorsque la qualité de réception est au-dessus d'un seuil de qualité, le signal occupé étant généré de sorte qu'il comporte des informations sur une puissance d'interférence ou une puissance de réception de signal de charge utile dans une fenêtre de temps de signal de charge utile.

29. Procédé pour recevoir selon la revendication 28, dans lequel la puissance de transmission de signal occupé est ajustée en fonction de la puissance d'interférence admissible reçue.

30. Programme d'ordinateur présentant des codes de programme pour réaliser un procédé selon la revendication 28 ou 29 lorsque le code de programme est exécuté sur un ordinateur.

# FIG 1

110

115

130

120

125

100

FIG 2

# FIG 3

FIG 4

# FIG 5

Receiver listens for a data block in the *i*-th timeslot of the TDMA frame — S1

Data received? — S2

No

Yes

Do not broadcast a busy burst in the *i*-th minislot — S4

Lower transmission rate permissible? — S7

No

Quality acceptable? — S5

No

Yes

Yes

Broadcast a busy burst in the *i*-th minislot requesting a lower rate transmission format — S6b

Broadcast a busy burst in the *i*-th minislot requesting a zero or more increase in transmission rate — S6a

EP 1 855 390 B1

## FIG 6

a)

600     600     600

610   620

b)

Timeout

Reservation aborted

600

⬚⬚⬚ Poor BER Packet        ⬚ Lower rate

▥ Good BER Packet        ▥ Maintain or increase rate

# FIG 7

EP 1 855 390 B1

**S1** — Data block scheduled for transmission in the $n$-th timeslot of the $i$-th TDMA frame?

**S2** — Listen to the $n$-th minislot of the $(i-1)$-th TDMA frame

**S3** — Strong busy burst detected?

**S4** — Transmit block in $n$-th timeslot of the $i$-th TDMA frame and STBS

No

Yes

**S11** — Determine interference tolerance of most vulnerable receiver

**S6** — Listen to the $n$-th minislot of the $i$-th TDMA frame

**S12** — Adjust transmit power accordingly

**S14** — Adjust PHY mode accordingly

**S13** — Change in rate requested?

Yes

No

**S8** — Reservation mode: Transmit next block in $n$-th timeslot of the $(i+1)$-th TDMA frame and STBS*

**S7** — Strong busy burst detected from intended receiver?

Yes

No

**S9** — Empty buffer?

No

Yes

**S10** — Wait for new data

**S5** — Reschedule

**FIG 8**

```
                    ┌─────────────────────────┐
                    │  Data block transmitted in │
                    │  the n-th timeslot of the i-th │ S1
                    │  TDMA frame and transmitter │
                    │     buffer not empty        │
                    └─────────────────────────┘
                                 │
                    ┌─────────────────────────┐
                    │      Listen to the       │
                    │   n-th minislot of the   │ S2
                    │     i-th TDMA frame      │
                    └─────────────────────────┘
```

S8 — Strong busy burst detected from vulnerable receivers?

S3 — Strong busy burst detected from intended receiver?

S5 — Empty buffer?

S6 — Enter contention mode and reschedule

S7 — Wait for new data

S9 — Determine interference tolerance of most vulnerable receiver

S10 — Adjust transmit power accordingly

S11 — Change in rate requested?

S12 — Adjust PHY mode accordingly

S4 — Transmit next block in n-th timeslot of the (i+1)-th TDMA frame and STBS

Yes / No / Yes / No / Yes / Yes / No

# FIG 9

Busy burst Transmit Power

910

900

Tx₂

Bᵤ₂₁

930

940

920

Low interference tolerance

High interference tolerance

(a): Hearability region for low interference tolerance
(b): Hearability region for high interference tolerance

FIG 10

Hearability region of busy signal

1000

1010

Receiver

Piggy-pack interferer intended information

Data
Busy-Signal

Piggy-pack transmitter intended information

Other Transmitter

1030

1020

Transmitter

EP 1 855 390 B1

FIG11

Legend (1150):
- Idle Slot
- Transmission
- Low SIR
- Reception

- No Busy burst
- Busy burst

- → Transmission
- ⋯⋯> Interference
- ▨ Busy burst hearability

Tx₁, Rx₁, Tx₂, Tx₃

Frame $i$ — Frame $i+1$ — Frame $i+2$ — time

1110, 1130, 1140, 1120, 1100

Low priority, High priority

Rx₂, Rx₃, Tx₃

EP 1 855 390 B1

38

FIG12

Tx₁

Rx₁

Tx₂

Tx₃

| | Idle Slot |
| | Transmission |
| | Low Tx power |
| | Reception |

| □ | No Busy burst |
| ■ | Busy burst |

Frame *i*

Frame *i+1*

Frame *i+2*

time

Time Slot

High priority

Low priority

Rx₁

Tx₁

Tx₂

Rx₂

Rx₃

Tx₃

⟶ Transmission

----▶ Interference

▨ Busy burst hearability

EP 1 855 390 B1

**FIG 13**

Transmission

Interference

Busy burst

$Tx_1$    $Rx_1$    $Tx_2$    $Rx_2$

**FIG 14**

$Tx1$   1

$L_{1,2}$

$R_2^d$

2   $Rx2$

$T_2^b$

$L_{2,3}$

$I_3^b$

$Tx3$   3

$T_3^d$

$L_{3,4}$

$Rx4$   4

FIG 15

EP 1 855 390 B1

FIG 16

EP 1 855 390 B1

# FIG 17

EP 1 855 390 B1

```
                           ┌─────────────────────────────┐
                           │  Data block scheduled       │
                           │  for transmission in the n-th│  S1
                           │  timeslot of the i-th TDMA frame? │
                           └──────────────┬──────────────┘
                                          │
                           ┌──────────────▼──────────────┐
                           │  Listen to the n-th minislot │  S2
                           │  of the (i-1)-th TDMA frame  │
                           └──────────────┬──────────────┘
                                          │
                                     ┌────▼────┐  S3
          ┌───────────────────┐  No │ Strong busy │  Yes
     S4   │ Transmit block in n-th timeslot of │◄──── │   burst    │ ────┐
          │ the i-th TDMA frame and STBS*      │      │  detected? │     │
          └──────────┬────────┘               └─────────┘          │
                     │                                             │
          ┌──────────▼────────┐                                    │
     S6   │ Lasten to the n-th minislot │                          │
          │ of the i-th TDMA frame │                               │
          └──────────┬────────┘                                    │
                     │                                             │
 ┌───────────────────┴─────────┐                                  │
 │ Reservation mode            │     ┌──────┐ S7        S9         │
 │  ┌────────────────────────┐ │     │Strong│         ┌────┐       │
 │  │ Transmit next block in n-th│ │ Yes │busy burst│  No │Empty│ No │
 │  │ timeslot of the (i+1)-th│◄──────│detected from│────►│buffer?│───►│Reschedule│
 │  │ TDMA frame and STBS*    │ │     │ intended │         └──┬──┘     S5
 │  └────────────────────────┘ │  S8 │ receiver?│            │ Yes
 └─────────────────────────────┘     └──────┘              ┌──▼───┐
                                                           │Wait for│ S10
        *STBS = signal transmitter buffer state            │new data│
                                                           └──────┘
```

*STBS = signal transmitter buffer state

# FIG 18

EP 1 855 390 B1

```
                    ┌─────────────────────────┐
                    │  Data block transmitted in │
                    │  the n-th timeslot of the i-th │ S1
                    │  TDMA frame and transmitter │
                    │  buffer not empty        │
                    └─────────────────────────┘
                                 │
                                 ▼
                    ┌─────────────────────────┐
                    │  Listen to the n-th minislot │ S2
                    │  of the i-th TDMA frame  │
                    └─────────────────────────┘
                                 │
                                 ▼
                              ◆ S3
                          Strong busy burst
                          detected from
                          intended receiver?
```

Data block transmitted in the $n$-th timeslot of the $i$-th TDMA frame and transmitter buffer not empty — S1

Listen to the $n$-th minislot of the $i$-th TDMA frame — S2

Strong busy burst detected from intended receiver? — S3

Yes → Transmit block in $n$-th timeslot of the $(i+1)$-th TDMA frame and STBS* — S4

No → Empty buffer? — S5

Empty buffer? Yes → Wait for new data — S7

Empty buffer? No → Enter contention mode and reschedule — S6

*STBS = signal transmitter buffer state

**FIG 19**

Receiver listens for a data block in the *i*-th timeslot of the TDMA frame — S1

Data received? — S2

No

Yes

Quality acceptable? — S3

No

Yes

S4 — Do not broadcast a busy burst in the *i*-th minislot

Yes

Transmitter buffer empty? — S5

No

Broadcast a busy burst in the i-th minislot — S6

**FIG 20**

2020  2030

2010

2000

FIG21

Frame i    Frame i+1    Frame i+2    time

Time Slot

2120
2130  2140
2100
2110

Tx₁
Rx₁
Tx₂
Tx₃

Idle Slot
Transmission
Tx Cancelled
Reception

No Busy burst
Busy burst

→ Transmission
┄┄> Interference
▨ Busy burst hearability

EP 1 855 390 B1

46

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004100461 A1
- EP 1628446 A1
- EP 1526685 A1
- EP 1289179 A1

**Non-patent literature cited in the description**

- **OMIYI P. et al.** Maximising spectral efficiency in 4th generation OFDM/TDMA TDD hybrid cellular mobile /ad-hoc wireless communications. VTC-Spring, 2004